(19) **Europäisches Patentamt / European Patent Office / Office européen des brevets**

(11) **EP 3 706 422 A1**

(12) **EUROPEAN PATENT APPLICATION**
published in accordance with Art. 153(4) EPC

(43) Date of publication:
**09.09.2020 Bulletin 2020/37**

(21) Application number: **18872881.0**

(22) Date of filing: **17.10.2018**

(51) Int Cl.:
**H04N 19/70** (2014.01)　　**H04N 19/172** (2014.01)
**H04N 19/31** (2014.01)　　**H04N 19/587** (2014.01)
**H04N 19/85** (2014.01)　　**H04N 21/2343** (2011.01)
**H04N 19/132** (2014.01)　　**H04N 21/2362** (2011.01)

(86) International application number:
**PCT/JP2018/038743**

(87) International publication number:
**WO 2019/087789 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.11.2017  JP 2017213285**

(71) Applicant: **Sony Corporation**
**Tokyo 108-0075 (JP)**

(72) Inventor: **TSUKAGOSHI, Ikuo**
**Tokyo 108-0075 (JP)**

(74) Representative: **2SPL Patentanwälte PartG mbB**
**Postfach 15 17 23**
**80050 München (DE)**

(54) **TRANSMISSION DEVICE, TRANSMISSION METHOD, RECEPTION DEVICE AND RECEPTION METHOD**

(57)　An inverse blending process is appropriately and easily performed on a receiving side in a case of transmission of blended moving image data.

Information indicating blending rates and information indicating blending target pictures are inserted into encoded image data associated with pictures of blended images in a case of transmission of blended moving image data. In addition, information indicating blending rates and information indicating blending target pictures in correspondence with image data associated with pictures of blended images are also transmitted in a case of transmission of blended moving image data by a digital interface. An inverse blending process can be appropriately and easily performed on a receiving side on the basis of the information indicating the blending rates and the information indicating the blending target pictures.

FIG.3

**Description**

[Technical Field]

The present technology relates to a transmission device, a transmission method, a reception device, and a reception method, and more particularly to a transmission device and others for transmitting blended moving image data.

[Background Art]

A camera which performs imaging at a high frame rate using a high-speed frame shutter is known in recent years. For example, a normal frame rate is 60 Hz or 50 Hz, while a high frame rate is a frame rate several times or several tens of times, or further several hundreds of times the normal frame rate.
It is considered that a service at a high frame rate can be provided by converting moving image data captured by a camera with a high-speed frame shutter into a sequence of moving images at a frequency lower than that of the high frame rate, and transmitting the converted moving image data. However, while images captured with the high-speed frame shutter produce advantageous effects of improving motion blurs and achieving high quality with high sharpness, these images have such an aspect that a problem of image quality may be caused in a conventional frame interpolation technology on the receiving and reproducing side which displays a sequence of moving image at a frame rate lower than a distributed high frame rate.
According to frame interpolation using highly sharp images captured with a high-speed frame shutter, a large difference is produced between a case of relevance of motion vector search and a case of non-relevance of motion vector search. In this case, the difference between these cases is displayed as remarkable image quality deterioration. Heavy-load calculation which is required for improving accuracy of motion vector search during frame interpolation influences costs of the receiver.
The present applicant previously proposed a technology which converts a material constituted by an image captured with a high-speed frame shutter, and displays the material with image quality at a certain level or higher using a conventional receiver which performs decoding at a normal frame rate (see Patent Literature 1).

[Citation List]

[Patent Literature]

[PTL 1]
PCT Patent Publication No. 2015/076277

[Summary]

[Technical Problem]

An object of the present technology is to perform an inverse blending process appropriately and easily on a receiving side in a case of transmission of blended moving image data.

[Solution to Problem]

A concept of the present technology is directed to a transmission device including: a processing unit that performs a process for blending image data indicating respective pictures of first moving image data at a first frame rate with image data indicating peripheral pictures at blending rates independent for each picture to obtain second moving image data at the first frame rate. At least image data indicating pictures corresponding to a second frame rate lower than the first frame rate in image data indicating respective pictures constituting the second moving image data is in a blended state with the image data indicating peripheral pictures. The transmission device further includes an encoding unit that obtains a basic stream by encoding the image data indicating the pictures corresponding to the second frame rate, and also obtains a predetermined number of extended streams by encoding image data indicating remaining pictures, an insertion unit that inserts information indicating blending rates and information indicating blending target pictures into encoded image data of the basic stream and the predetermined number of extended streams, and a transmission unit that transmits a container including the basic stream and the predetermined number of extended streams into which the information indicating the blending rates and the blending target pictures are inserted.
According to the present technology, the second moving image data at the first frame rate is obtained by performing the process for blending the image data indicating the respective pictures of the first moving image data at the first frame rate with the image data indicating the peripheral pictures at the blending rates independent for each picture. In this case, at least the image data indicating the pictures corresponding to the second frame rate lower than the first frame rate in the image data indicating the respective pictures constituting the second moving image data is in the blended state with the image data indicating the peripheral pictures. For example, the first frame rate is what is called a high frame rate, such as 120 Hz and 240 Hz, while the second frame rate is what is called a normal frame rate such as 60 Hz.

The encoding unit obtains the basic stream by encoding the image data indicating the pictures corresponding to the second frame rate, and also obtains the predetermined number of extended streams by encoding the image data indicating the remaining pictures. For example, the encoding unit may be configured to encode the basic stream into a lowermost layer, and encode the predetermined number of extended streams into layers higher than the lowermost layer.

The insertion unit inserts the information indicating the blending rates and the information indicating the blending target pictures into the encoded image data of the basic stream and the predetermined number of extended streams. For example, the information indicating the blending target pictures may be picture identification information individually given to a corresponding picture. In addition, for example, the information indicating the blending target pictures may be information indicating a time position relationship between pictures. Furthermore, the transmission unit transmits the container including the basic stream and the predetermined number of extended streams into which the information indicating the blending rates and the blending target pictures are inserted.

According to the present technology, as described above, the information indicating the blending rates and the information indicating the blending target pictures are inserted into the encoded image data of the basic stream and the predetermined number of extended streams. Accordingly, an inverse blending process can be appropriately performed on a receiving side, thereby obtaining moving image data at the high frame rate in a preferable manner.

Note that the insertion unit of the present technology may be configured to further insert type information that indicates the number of layers for the layer encoding and a direction of blending into a layer of the container including the basic stream and the predetermined number of extended streams, for example. In this case, the number of layers for the layer encoding and the direction of blending can be recognized on the receiving side without decoding the basic stream and the extended streams.

Another concept of the present technology is directed to a reception device including: a reception unit that receives a container including a basic stream and a predetermined number of extended streams. The basic stream is obtained by encoding image data that is included in second moving image data at a first frame rate obtained by performing a process for blending image data indicating respective pictures of first moving image data at the first frame rate with image data indicating peripheral pictures at blending rates independent for each picture, and indicates pictures corresponding to a second frame rate lower than the first frame rate in a blended state with at least the image data indicating the peripheral pictures. The predetermined number of extended streams are obtained by encoding image data indicating remaining pictures. Information indicating blending rates and information indicating blending target pictures are inserted into encoded image data of the basic stream and the predetermined number of extended streams. The reception device further includes a processing unit that obtains, in accordance with a display ability, moving image data at the second frame rate by decoding the basic stream, or moving image data at a frame rate equal to or lower than the first frame rate and higher than the second frame rate by decoding the basic stream and a part or all of the predetermined number of extended streams and performing an inverse blending process on the basis of the information indicating the blending rates and the information indicating the blending target pictures.

According to the present technology, the reception unit receives the container including the basic stream and the predetermined number of extended streams. The basic stream is obtained by encoding image data that is included in the second moving image data at the first frame rate obtained by performing the process for blending the image data indicating the respective pictures of the first moving image data at the first frame rate with the image data indicating the peripheral pictures at the blending rates independent for each picture, and indicates the pictures corresponding to the second frame rate lower than the first frame rate in the blended state with at least the image data indicating the peripheral pictures. The predetermined number of extended streams are obtained by encoding the image data indicating the remaining pictures.

The information indicating the blending rates and the information indicating the blending target pictures are inserted into the encoded image data of the basic stream and the predetermined number of extended streams. The processing unit obtains moving image data at the second frame rate (normal frame rate) by processing only the basic stream, or blending-cancelled moving image data at the frame rate equal to or lower than the first frame rate and higher than the second frame rate (high frame rate) by processing the basic stream and a part or all of the predetermined number of extended streams on the basis of the information indicating the blending rates and the information indicating the blending target pictures.

According to the present technology, as described above, blending-cancelled moving image data at the high frame rate is obtained by processing the basic stream and a part or all of the predetermined number of extended streams on the basis of the information indicating the blending rates and the information indicating the blending target pictures.

Accordingly, the inverse blending process is appropriately and easily achievable, wherefore moving image data at the high frame rate can be obtained in a preferable manner.

Moreover, a further concept of the present technology is directed to a transmission device including: an acquisition unit that acquires second moving image data obtained by performing a process for blending image data indicating respective pictures of first moving image data with image data indicating peripheral pictures at blending rates independent for each picture; and a transmission unit that transmits the second moving image data, information indicating blending rates of respective pictures, and information indicating blending target pictures to an external device via a transmission path.

According to the present technology, the acquisition unit acquires the second moving image data obtained by performing the process for blending the image data indicating the respective pictures of the first moving image data with the image data indicating the peripheral pictures at the blending rates independent for each picture. The transmission unit transmits the second moving image data, the information indicating the blending rates of the respective pictures, and the information indicating the blending target pictures to the external device via the transmission path. For example, the transmission unit may be configured to transmit the information indicating the blending rates of the respective pictures and the information indicating the blending target pictures while inserting the information indicating the blending rates and the blending target pictures into blanking periods of the image data indicating the respective pictures of the second moving image data.

According to the present technology, the second moving image data obtained by performing the process for blending the image data indicating the respective pictures of the first moving image data with the image data indicating the peripheral pictures at the blending rates independent for each picture is transmitted to the external device via the transmission path together with the information indicating the blending rates of the respective pictures, and the information indicating the blending target pictures. Accordingly, the external device can appropriately and easily obtain blending-cancelled moving image data at a high frame rate and therefore achieve preferable moving image display by performing an inverse blending process for the second moving image data on the basis of the information indicating the blending rates of the respective pictures and the information indicating the blending target pictures.

According to the present technology, for example, note that a processing unit that performs an inverse blending process for image data indicating respective pictures of the second moving image data on the basis of information indicating the blending rates and information indicating blending target pictures to obtain third moving image data may be further provided. In this case, the transmission unit may be configured to transmit the third moving image data instead of the second moving image data when the external device does not have a function of the inverse blending process.

Furthermore, a still further concept of the present technology is directed to a reception device including: a reception unit that receives, from an external device via a transmission path, second moving image data obtained by performing a process for blending image data indicating respective pictures of first moving image data with image data indicating peripheral pictures at blending rates independent for each picture, information indicating blending rates of respective pictures, and information indicating blending target pictures; and a processing unit that obtains third moving image data blending-cancelled by performing an inverse blending process for image data indicating respective pictures of the second moving image data on the basis of the information indicating the blending rates and the information indicating the blending target pictures.

According to the present technology, the reception unit receives, from the external device via the transmission path, the second moving image data obtained by performing the process for blending the image data indicating the respective pictures of the first moving image data with the image data indicating the peripheral pictures at the blending rates independent for each picture, the information indicating the blending rates of the respective pictures, and the information indicating the blending target pictures. The processing unit obtains the third moving image data blending-cancelled by performing the inverse blending process for the image data indicating the respective pictures of the second moving image data on the basis of the information indicating the blending rates and the information indicating the blending target pictures.

According to the present technology, as described above, the information indicating the blending rates of the respective pictures and the information indicating the blending target pictures are received from the external device together with the blended second image data. The blending-cancelled moving image data is obtained by performing the inverse blending process for the image data indicating the respective pictures of the second moving image data on the basis of the information indicating the blending rates and the information indicating the blending target pictures. Accordingly, moving image data at a high frame rate similar to the moving image data before blending can be appropriately and easily obtained, wherefore preferable moving image display is achievable.

[Advantageous Effects of Invention]

According to the present technology, an inverse blending process is appropriately and easily achievable on a receiving side in a case of transmission of blended moving image data. Note that advantageous effects to be produced are not necessarily limited to the advantageous effect described herein, and any advantageous effects described in the present disclosure may be produced.

[Brief Description of Drawings]

[FIG. 1]

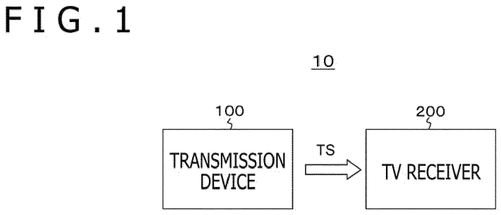

FIG. 1 is a block diagram depicting a configuration example of a transmission and reception system according to a first embodiment.
[FIG. 2]

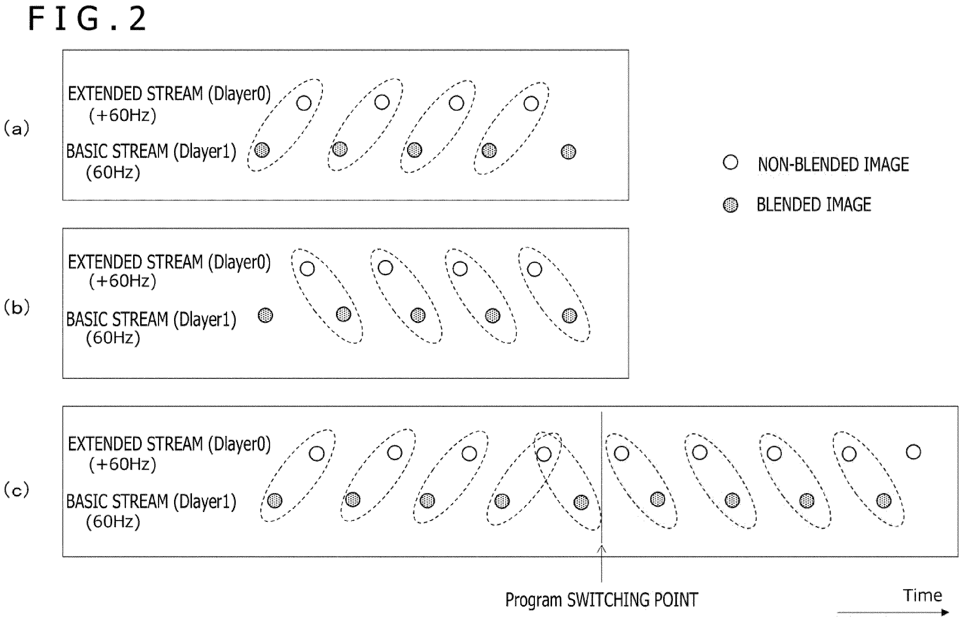

FIG. 2 is a diagram depicting an example of a basic stream and an extended stream obtained by blending moving image data at 120 Hz (a type having two layers and blending with next images, and a type having two layers and blending with past images).
[FIG. 3]

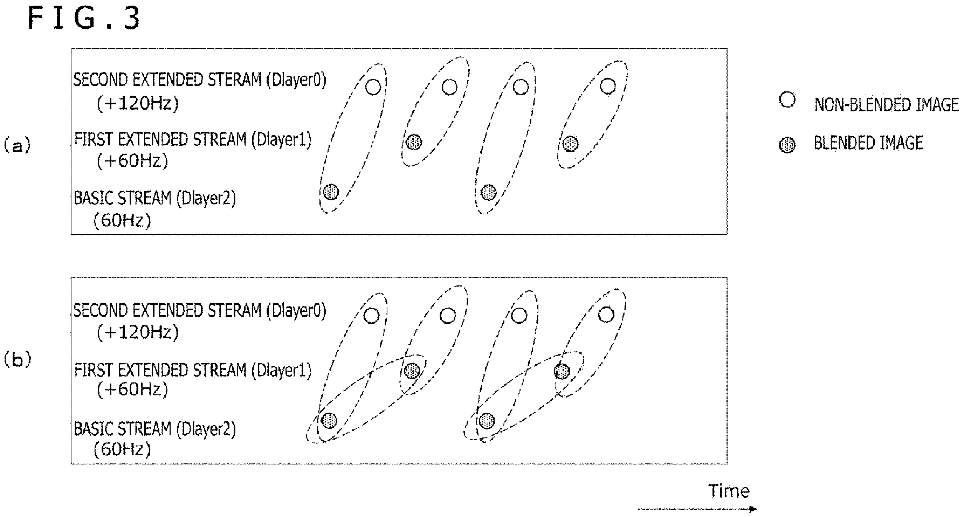

FIG. 3 is a diagram depicting an example of a basic stream and extended streams obtained by blending moving image data at 240 Hz (a type having three layers and blending with next images).
[FIG. 4]

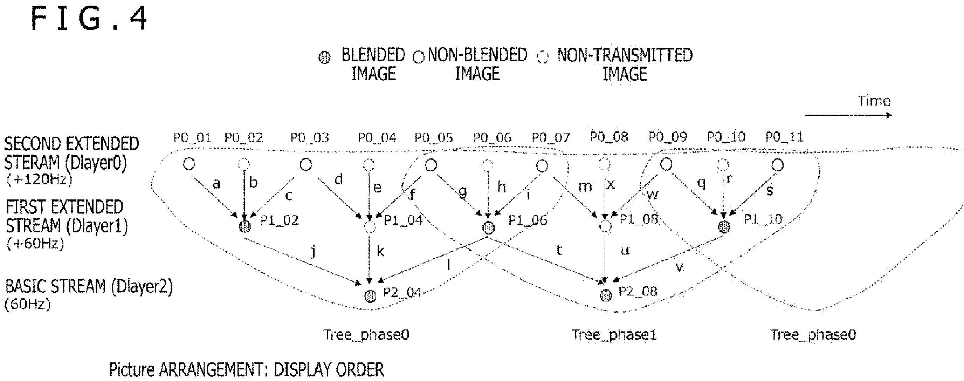

FIG. 4 is a diagram depicting an example of a basic stream and extended streams obtained by blending moving image data at 240 Hz (a type having three layers and blending with past and next images).
[FIG. 5]

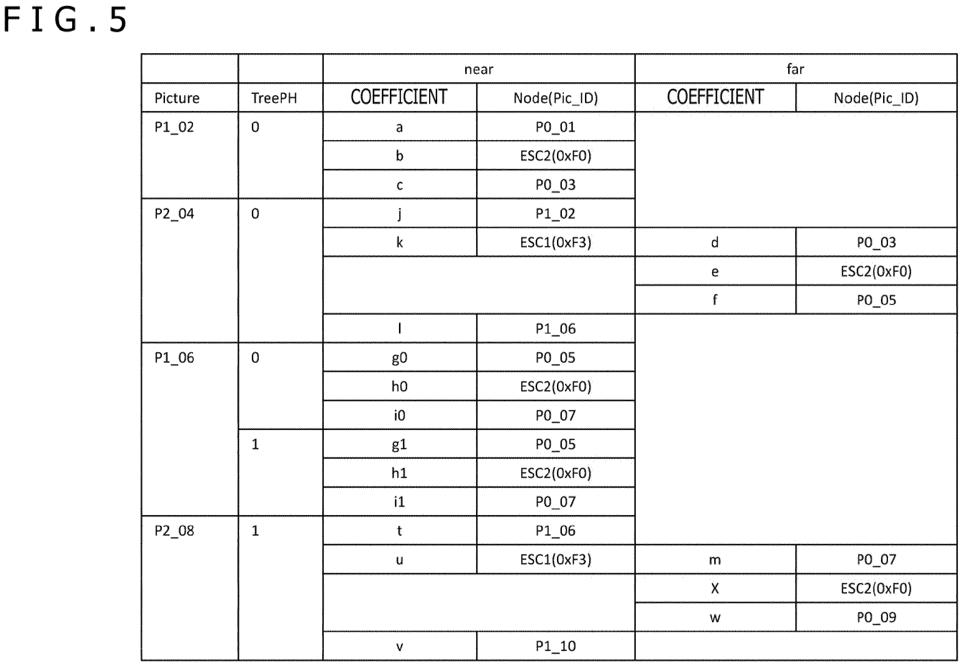

FIG. 5 is a diagram depicting a calculation target designation table of respective pictures corresponding to the example of FIG. 4.
[FIG. 6]

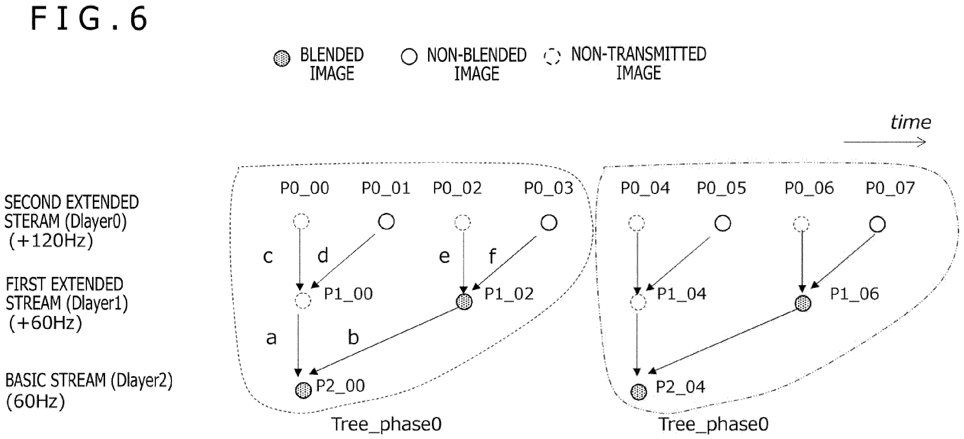

FIG. 6 is a diagram depicting an example of a basic stream and extended streams obtained by blending moving image data at 240 Hz (a type having three layers and blending with next images).
[FIG. 7]

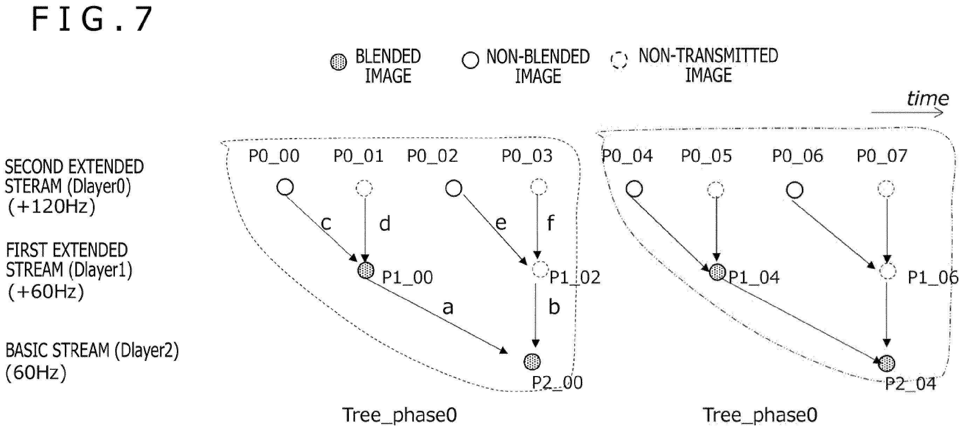

FIG. 7 is a diagram depicting an example of a basic stream and extended streams obtained by blending moving image data at 240 Hz (a type having three layers and blending with past images).
[FIG. 8]

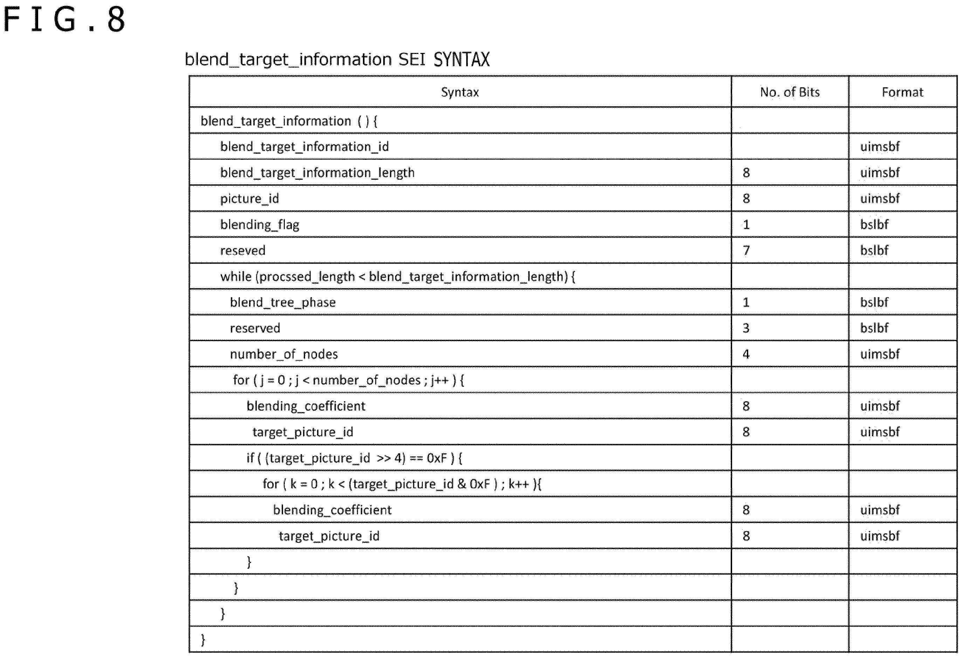

FIG. 8 is a diagram depicting a structure example of a blend target information SEI message in a case where information indicating a blending target picture includes a picture ID.
[FIG. 9]

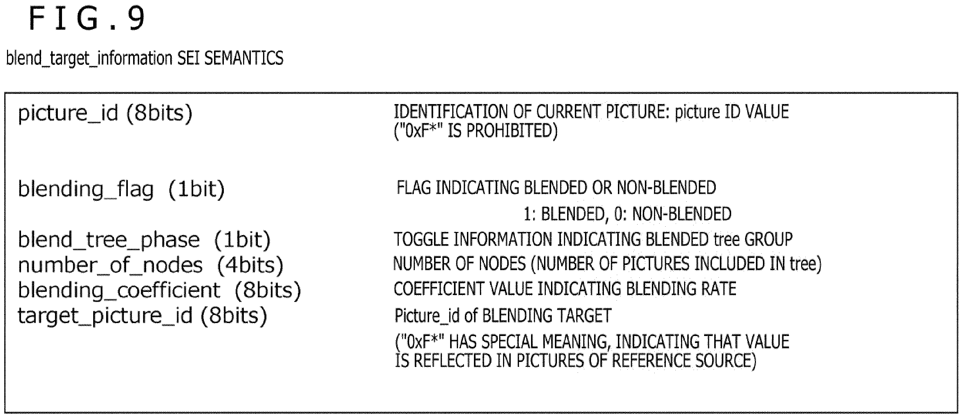

FIG. 9 is a diagram depicting contents of main information in the structure example of FIG. 8.
[FIG. 10]

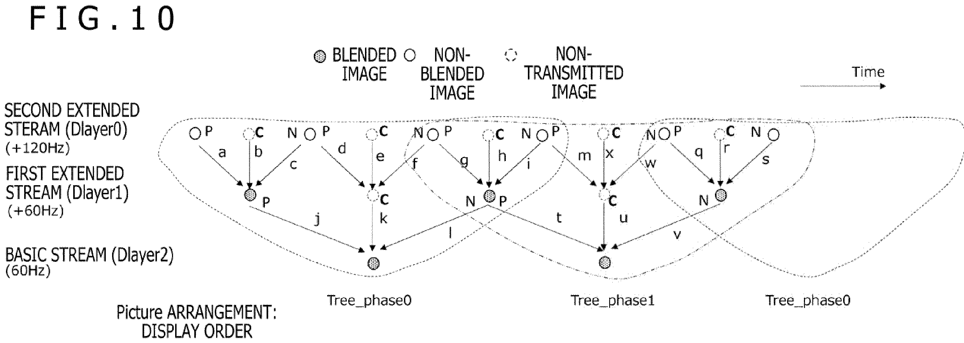

FIG. 10 is a diagram depicting an example of a basic stream and extended streams obtained by blending moving image data at 240 Hz (a type having three layers and blending with past and next images).
[FIG. 11]

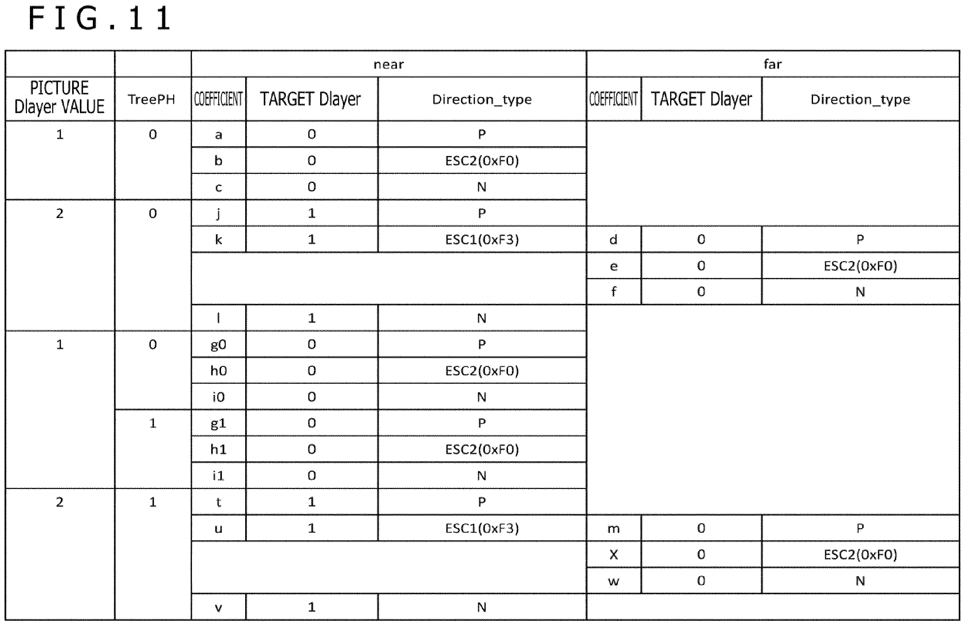

FIG. 11 is a diagram depicting a calculation target designation table of respective pictures corresponding to the example of FIG. 10.
[FIG. 12]

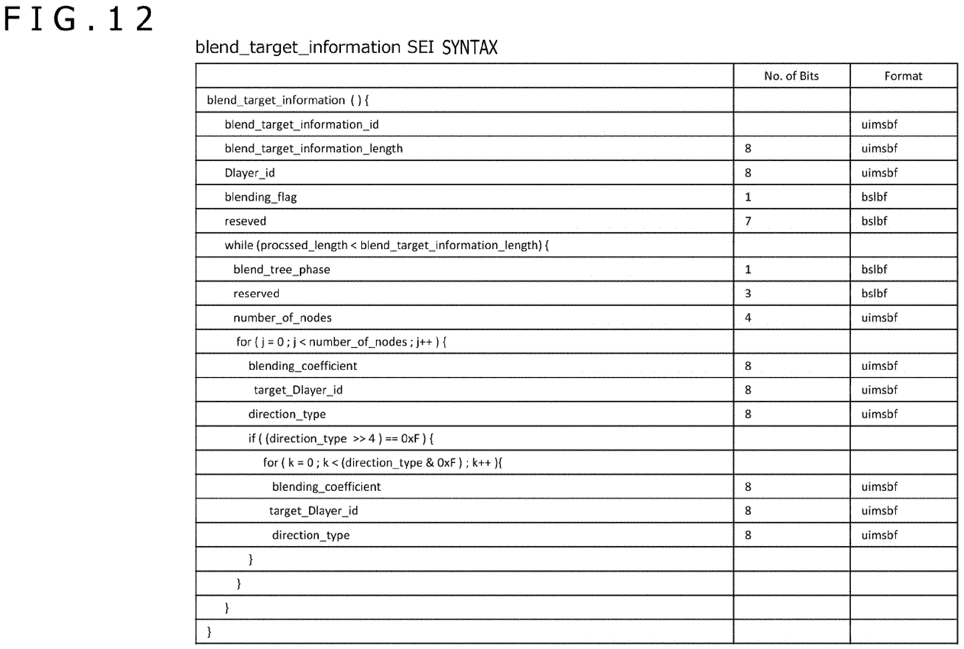

FIG. 12 is a diagram depicting a structure example of a blend target information SEI message in a case where information indicating a blending target picture is information indicating a time position relationship between pictures.
[FIG. 13]

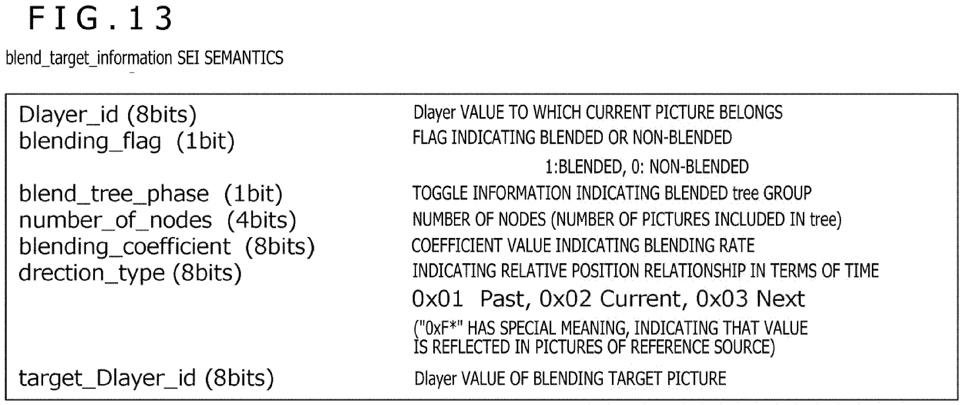

FIG. 13 is a diagram depicting contents of main information in the structure example of FIG. 12.
[FIG. 14]

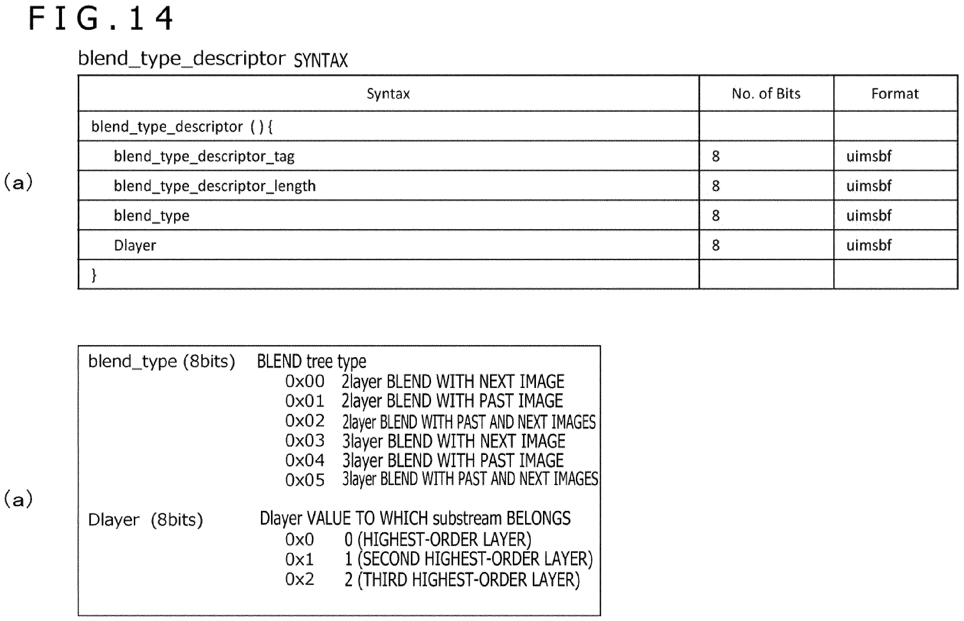

FIG. 14 is a diagram depicting a structure example of a blend type descriptor and contents of main information in this structure example.
[FIG. 15]

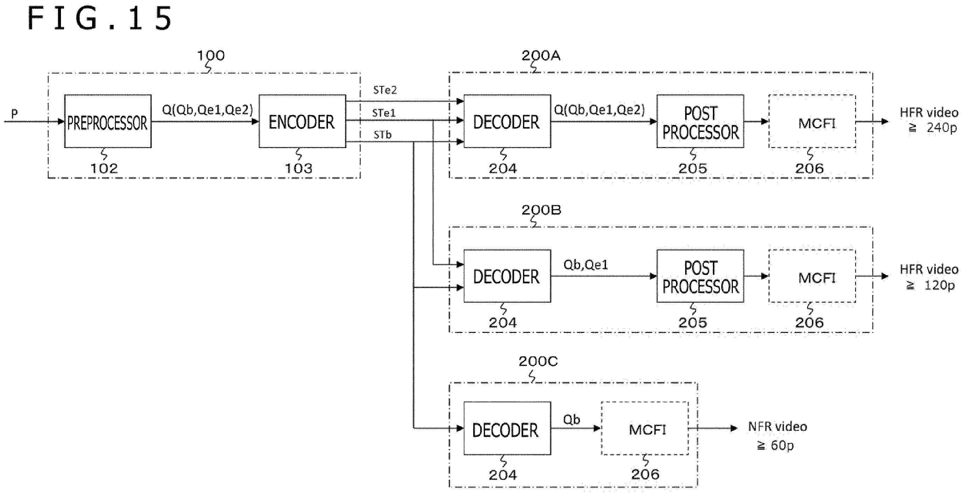

FIG. 15 is a diagram depicting an example of a processing outline of a transmission device and a TV receiver.
[FIG. 16]

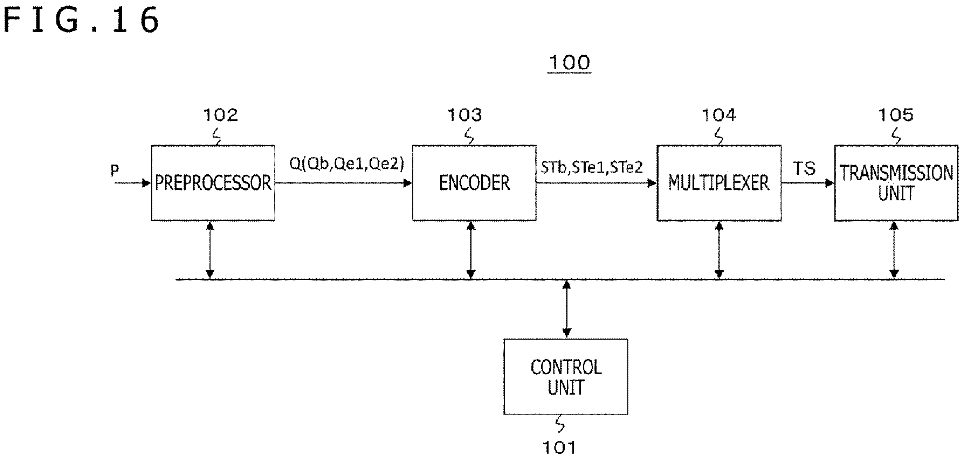

FIG. 16 is a block diagram depicting a configuration example of the transmission device.
[FIG. 17]

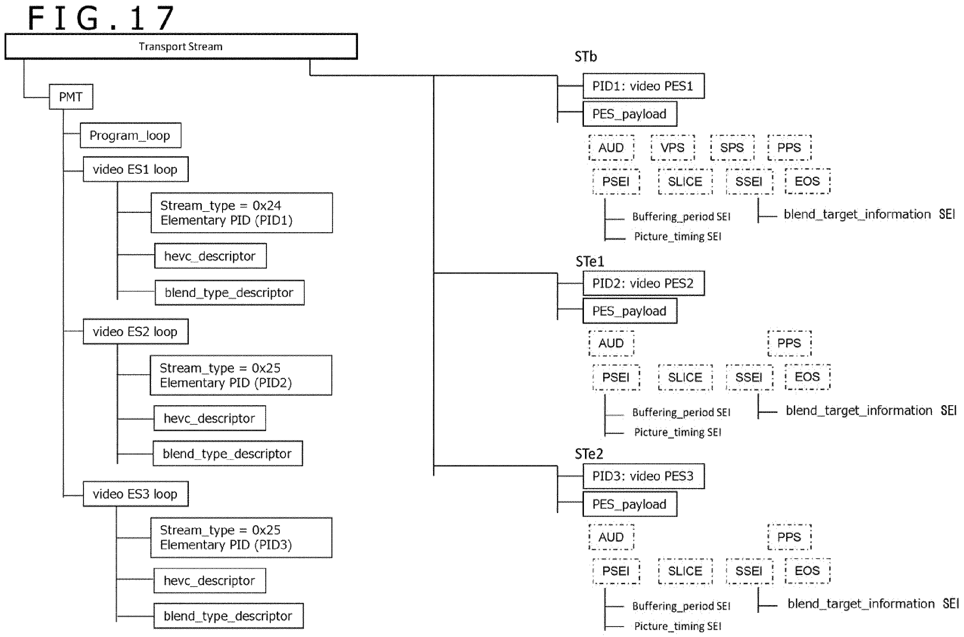

FIG. 17 is a diagram depicting a configuration example of a transport stream TS.
[FIG. 18]

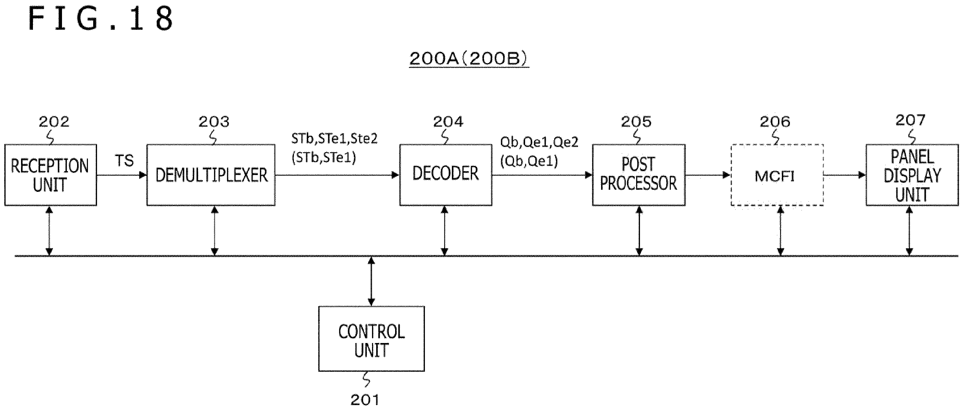

FIG. 18 is a block diagram depicting a configuration example of a TV receiver having a decoding capability for processing moving image data at a high frame rate of 240 Hz (120 Hz).
[FIG. 19]

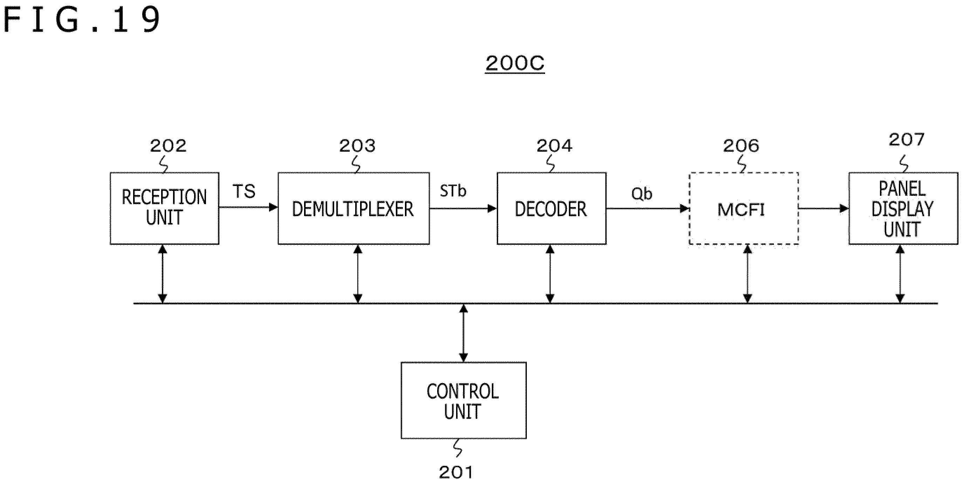

FIG. 19 is a block diagram depicting a configuration example of a TV receiver having a decoding capability for processing moving image data at a normal frame rate of 60 Hz.

[FIG. 20]

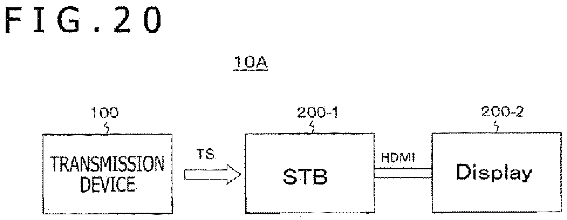

FIG. 20 is a block diagram depicting a configuration example of a transmission and reception system according to a second embodiment.

[FIG. 21]

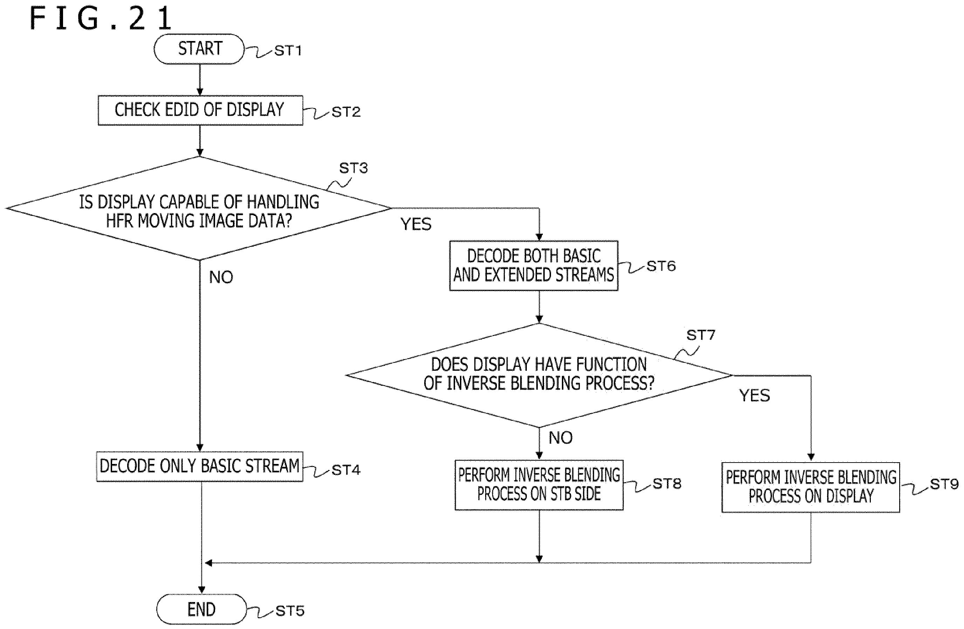

FIG. 21 is a flowchart depicting an example of control processing procedures performed by a control unit (CPU) of a set top box.

[FIG. 22]

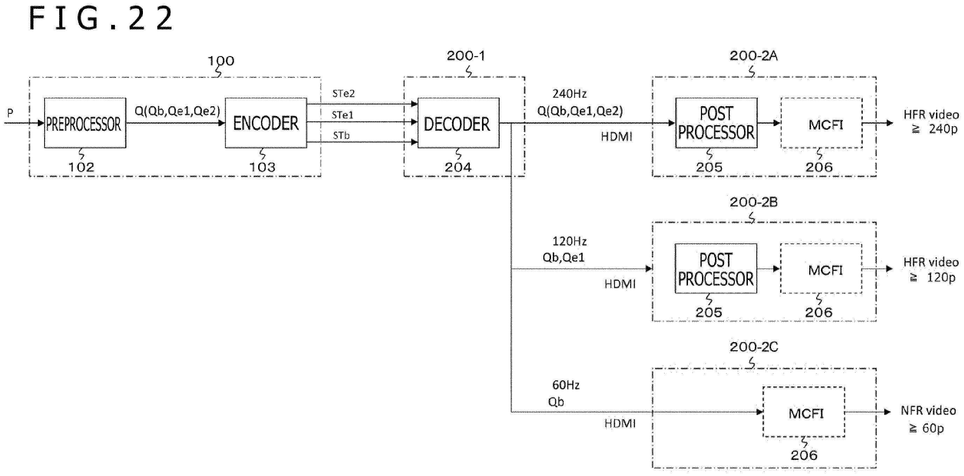

FIG. 22 is a diagram depicting an example of a processing outline performed by the transmission device, the set top box, and a display.

[FIG. 23]

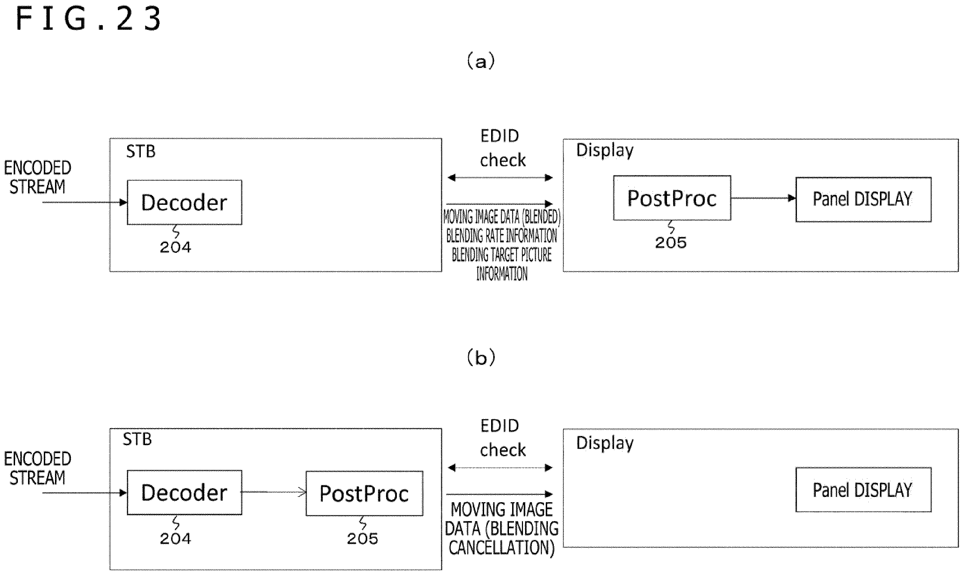

FIG. 23 is a diagram depicting a comparison between a case where the display has a function of an inverse blending process (blending cancellation process) and a case where the display does not have this function.

[FIG. 24]

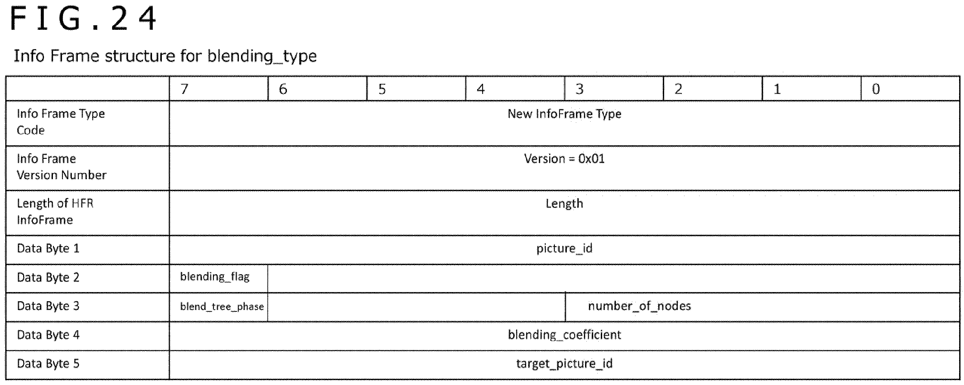

FIG. 24 is a diagram depicting a structure example of a blending type info-frame in a case where information indicating a blending target picture includes a picture ID.

[FIG. 25]

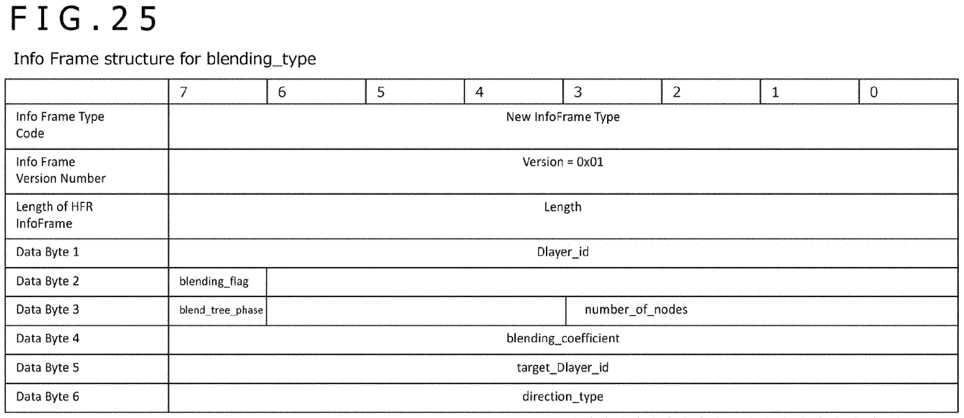

FIG. 25 is a diagram depicting a structure example of a blending type info-frame in a case where information indicating a blending target picture includes information indicating a time position relationship between pictures.

[FIG. 26]

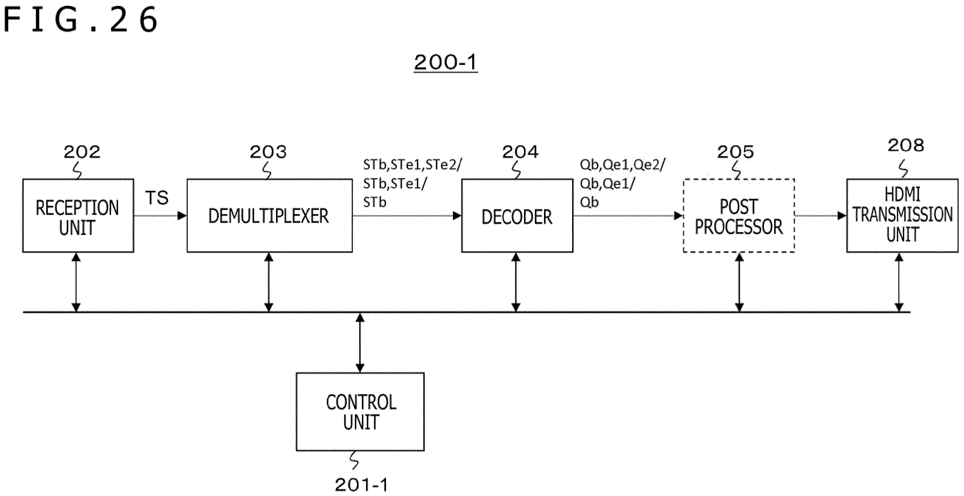

FIG. 26 is a block diagram depicting a configuration example of the set top box.

[FIG. 27]

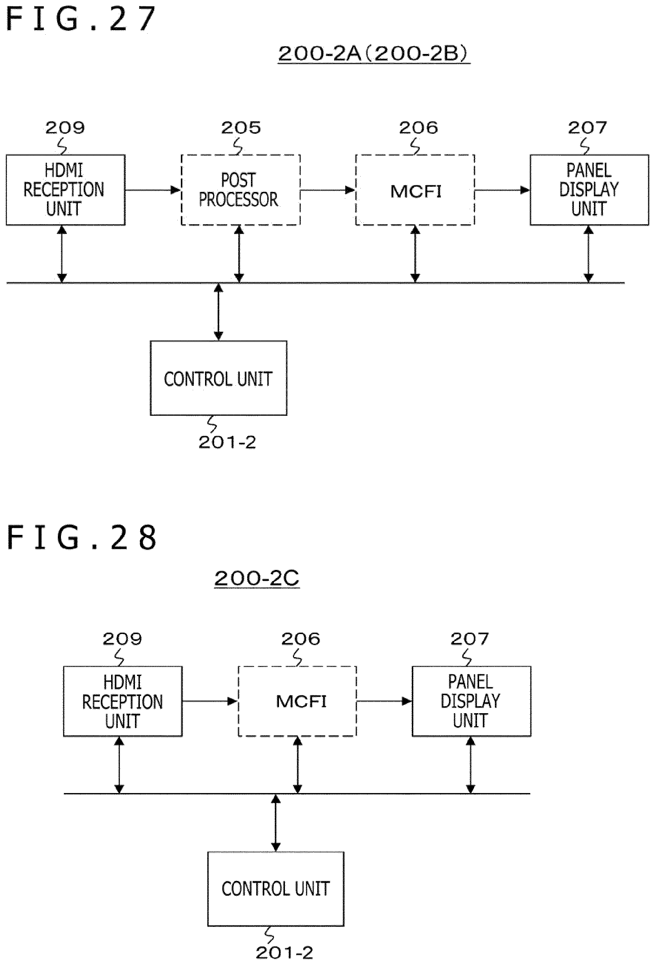

FIG. 27 is a block diagram depicting a configuration example of a display handling moving image data at a high frame rate of 240 Hz (120 Hz).

[FIG. 28]

FIG. 28 is a block diagram depicting a configuration example of a display handling moving image data at a normal frame rate of 60 Hz.

[Description of Embodiments]

Modes for carrying out the invention (hereinafter referred to as "embodiments") will be hereinafter described. Note that the description will be presented in the following order.

1. First Embodiment
2. Second Embodiment
3. Modified Examples

<1. First Embodiment>

[Transmission and reception system]

FIG. 1 depicts a configuration example of a transmission and reception system 10 according to a first embodiment. The transmission and reception system 10 includes a transmission device 100 and a TV receiver 200.

The transmission device 100 transmits a transport stream TS functioning as a container and carried on a broadcast wave. The transport stream TS includes a basic stream (basic video stream) and a predetermined number of extended streams (extended video streams) obtained by processing moving image data at a high frame rate, or 120 Hz or 240 Hz in this embodiment. According to this embodiment, each of the basic stream and the extended streams has an NAL unit structure.

The basic stream herein is obtained in the following manner. More specifically, blended moving image data at the high frame rate is obtained by performing a blending process for blending image data indicating respective pictures of moving image data at the high frame rate before blending with image data indicating peripheral pictures at blending rates independent for each picture.

At least image data indicating pictures corresponding to a normal frame rate, or 60 Hz in this embodiment, in image data indicating respective pictures constituting the blended moving image data at the high frame rate is in a blended state with the image data indicating the peripheral pictures. The basic stream is obtained by encoding this image data indicating the pictures corresponding to the normal frame rate. In addition, the predetermined number of extended streams are obtained by encoding image data indicating the remaining pictures.

The basic stream includes the encoded image data indicating the respective pictures at the normal frame rate as an access unit. Meanwhile, the predetermined number of extended streams each include the encoded image data indicating the respective pictures at the high frame rate as an access unit. Information indicating blending rates and information indicating blending target pictures are inserted into encoded image data associated with blended images. In this manner, an inverse blending process is appropriately and easily achievable on the receiving side.

FIG. 2(a) depicts an example of a type having two layers and blending with next images. Each of round marks represents image data indicating a corresponding picture. In this example, a basic stream at 60 Hz and an extended stream at +60 Hz each obtained by processing moving image data at 120 Hz are present. In this case, image data indicating respective pictures of the basic stream at 60 Hz is blended with image data indicating pictures of the extended stream at +60 Hz located immediately after. In this case, the layer of the basic stream at 60 Hz corresponds to a lowest layer 1 "Dlayer 1," while the layer of the extended stream at +60 Hz corresponds to a layer 0 "Dlayer0" above the layer 1.

FIG. 2(b) depicts an example of a type having two layers and blending with past images. Each of round marks represents image data indicating a corresponding picture. In this example, a basic stream at 60 Hz and an extended stream at +60 Hz each obtained by processing moving image data at 120 Hz are present. In this case, image data indicating the respective pictures of the basic stream at 60 Hz is blended with image data indicating pictures of an extended stream at +60 Hz immediately before. In this case, the layer of the basic stream at 60 Hz corresponds to a lowest layer 1 "Dlayer 1," while the layer of the extended stream at +60 Hz corresponds to a layer 0 "Dlayer0" above the layer 1.

FIG. 2(c) depicts an example which switches a type blending with next images before a switching point of a program to a type blending with past images after the switching point. In this example, the type blending with next images continues until the second last part from the switching point, but the type blending with past images starts at the part immediately before the switching point instead of the type blending with next images to avoid blending with another program. Even in the case including switching of programs as described above, image data indicating respective pictures of the basic stream are constantly blended, wherefore reduction of a strobing effect is achievable during reproduction on the receiving side.

FIG. 3(a) depicts an example of a type having three layers and blending with next images. Each of round marks represents image data indicating a corresponding picture. In this example, a basic stream at 60 Hz, a first extended stream at +60 Hz, and a second extended stream at +120 Hz each obtained by processing moving image data at 240 Hz are present. In this case, image data indicating respective pictures of the first extended stream at +60 Hz is blended with image data indicating pictures of the second extended stream at +120 Hz immediately after. In addition, image data indicating respective pictures of the basic stream at 60 Hz is blended with image data indicating pictures of the second extended stream at +120 Hz immediately after.

This example is a case where next compatibility between a receiver corresponding to 240 Hz and a receiver corresponding to 60 Hz is not considered, but next compatibility between a receiver corresponding to 240 Hz and a receiver corresponding to 120 Hz is considered. Accordingly, image data indicating respective pictures of the basic stream is not blended with image data indicating pictures of the first extended stream at +60 Hz. Moreover, in this case, the layer of the basic stream at 60 Hz corresponds to a lowest layer 2 "Dlayer2," the layer of the first extended stream at +60 Hz corresponds to a layer 1 "Dlayer1" above the layer 2, and the layer of the second extended stream at +120 Hz corresponds to a layer 0 "Dlayer0" above the layer 1.

FIG. 3(b) depicts an example of a type having three layers and blending with next images. Each of round marks represents image data indicating a corresponding picture. In this example, a basic stream at 60 Hz, a first extended stream at +60 Hz, and a second extended stream at +120 Hz each obtained by processing moving image data at 240 Hz are present. In this case, image data indicating respective pictures of the first extended stream at +60 Hz is blended with image data indicating pictures of the second extended stream at +120 Hz immediately after. In addition, image data indicating the respective pictures of the basic stream at 60 Hz is blended with image data indicating pictures of the second extended stream at +120 Hz and image data indicating pictures of the first extended stream at +60 Hz located immediately after.

This example is a case where next compatibility between a receiver corresponding to 240 Hz and a receiver corresponding to 120 Hz, and also next compatibility with a receiver corresponding to 60 Hz are considered. Accordingly, image data indicating respective pictures of the basic stream at 60 Hz is also blended with image data indicating pictures of the first extended stream at +60 Hz. Moreover, in this case, the layer of the basic stream at 60 Hz corresponds to the lowest layer 2 "Dlayer2," the layer of the first extended stream at +60 Hz corresponds to the layer 1 "Dlayer1" above the layer 2, and the layer of the second extended stream at +120 Hz corresponds to the layer 0 "Dlayer0" above the layer 1.

FIG. 4 depicts an example of a more typical type having three layers and blending with past and next images. In this example, a basic stream at 60 Hz, a first extended stream at +60 Hz, and a second extended stream at +120 Hz each obtained by processing moving image data at 240 Hz are present. In this case, the layer of the basic stream at 60 Hz corresponds to a lowest layer 2 "Dlayer 2," the layer of the first extended stream at +60 Hz corresponds to a layer 1 "Dlayer1" above the layer 2, and the layer of the second extended stream at +120 Hz corresponds to a layer 0 "Dlayer0" above the layer 1. Each of round marks represents image data indicating a corresponding picture, while each of parts defined by broken lines represents image data indicating pictures not actually transmitted. In addition, in the example depicted in the figure, each of the round marks is given a picture ID (picture identification information) representing a picture associated with the corresponding round mark and located at a position of the corresponding round mark.

Image data indicating the respective pictures of the first extended stream at +60 Hz is blended with image data indicating the pictures of the second extended stream at +120 Hz immediately before and immediately after. For example, image data having a picture ID "P1_02" is generated by blending respective image data having picture IDs [P0_01], [P0_02], and [P0_03] at rates a, b, and c, respectively. In this case, the image data having the picture ID [P0_02] is data at the same timing as that of the image data having the picture ID "P1_02," and therefore is not transmitted.

In addition, for example, image data having a picture ID "P1_06" is generated by blending respective image data having picture IDs [P0_05], [P0_06], and [P0_07] at rates g, h, and i, respectively. In this case, the image data indicating the picture ID [P0_06] is data at the same timing as that of the image data having the picture ID "P1_06," and therefore is not transmitted.

In addition, image data indicating the respective pictures of the basic stream at 60 Hz is blended with image data indicating pictures of the first extended stream at +60 Hz immediately before and immediately after. For example, image data indicating a picture ID "P2_04" is generated by blending respective image data having picture IDs [P1_02], [P1_04], and [P1_06] at rates j, k, and 1, respectively. Image data indicating the picture ID "P1_04" herein is generated by blending respective image data having picture IDs [P0_03], [P0_04], and [P0_05] at rates d, e, and f, respectively. In this case, the image data having the respective picture IDs [P0_04] and [P1_04] corresponds is data at the same timing as that of the image data indicating the picture ID "P2_04," and therefore is not transmitted.

In this case, the image data indicating the picture ID "P2_04" is blended by a blending process using following Equation (1). Note that respective pieces of image data in Equation (1) are represented by picture IDs.

$$P2\_04 = j*P1\_02 + k*P1\_04 + 1*P1\_06$$
$$= j*(a*P0\_01 + b*P0\_02 + c*P0\_03) +$$
$$k*(d*P0\_03 + e*P0\_04 + f*P0\_05)$$
$$+ 1*(g*P0\_05 + h*P0\_06 + j*P0\_07)$$
$$...(1)$$

The image data indicating the picture ID "P2_04" herein is generated by blending the respective image data having picture IDs [P0_01] to [P1_07] in the original moving image data at 240 Hz. In addition, the image data indicating next pictures of the basic stream at 60 Hz is generated by blending respective image data having the picture IDs [P0_05] to [P0_011] in the original moving image data at 240 Hz. In this case, the image data indicating the picture IDs [P0_05] to [P0_07] belongs to both "Tree_phase0" and "Tree_phase1" to arrange the respective pictures of the basic stream at 60 Hz at equal intervals. The values of g, h, and i representing blending rates of "Tree_phase0" may be the same values as or different from those values of "Tree_phase1." As depicted in the figure, "Tree_phase0" and "Tree_phase1" are alternately repeated in a toggled manner.

The example depicted in the figure considers next compatibility between a receiver corresponding to 240 Hz and a receiver corresponding to 120 Hz, and further with a receiver corresponding to 60 Hz. Information indicating blending rates and information indicating blending target pictures are transmitted while added to the image data generated by blending. The receiver corresponding to 60 Hz achieves display at 60 Hz using image data of the basic stream at 60 Hz without change.

In addition, the receiver corresponding to 120 Hz is capable of generating a stream at 120 Hz constituted by the image data indicating the picture ID [P1_02], the image data indicating the picture ID [P1_04], the image data indicating the picture ID [P1_06], and the like by appropriately performing the inverse blending process while inversely following the tree depicted in the figure to achieve display at 120 Hz. In addition, the receiver at 240 Hz is also capable of generating a stream at 240 Hz constituted by the image data indicating the picture ID [P0_01], the image data indicating the picture ID [P0_02], the image data indicating the picture ID [P0_03], and the like to achieve display at 240 Hz by appropriately performing the inverse blending process while inversely following the tree depicted in the figure to achieve display at 240 Hz.

A table in FIG. 5 represents a calculation target designation table concerning respective pictures corresponding to the example of FIG. 4. The picture [P1_02] belongs to "Tree_phase0." In addition, as depicted in the figure, blending target pictures of this picture are constituted by the picture [P0_01] adjacent to the picture [P1_02], i.e., the "near" picture, a picture represented by an escape code ESC2(0×F0), and the picture [P0_03], and multiplied by coefficients a, b, and c determining the blending rates, respectively, and then added to generate the picture [P1_02].

Note that the picture represented by the escape code ESC2(0xF0) actually corresponds to the picture [P0_02]. However, this picture [P0_02] is not transmitted, and therefore is represented by the special escape code ESC2(0×F0). In this case, "F" of high-order 4 bits represents a picture not actually transmitted. In addition, "0" of low-order 4 bits represents that a leaf shape will be formed ahead without branches.

The table information associated with "near" as described above (information indicating the blending rates and information indicating the blending target pictures is inserted into encoded image data associated with the picture [P1_02], and transmitted to the receiving side, and then utilized as inverse blending process information for obtaining the image data indicating the picture [P0_02].

Moreover, the picture [P2_04] belongs to "Tree_phase0." In addition, as depicted in the figure, blending target pictures of this picture are constituted by the picture [P1_02] adjacent to the picture [P2_04], i.e., the "near" picture, a picture represented by an escape code ESC1(0×F3), and the picture [P1_06], and multiplied by coefficients j, k, and 1 determining the blending rates, respectively, and then added to generate the picture [P2_04].

Note that the picture represented by the escape code ESC1(0×F3) actually corresponds to the picture [P1_04]. However, this picture [P1_04] is not transmitted, and therefore is represented by the special escape code ESC1(0×F3). In this case, "F" of high-order 4 bits represents a picture not actually transmitted. In addition, "3" of the low-order 4 bits represents that three branches are present ahead.

In addition, as depicted in the figure, three pictures of the processing target pictures of the pictures represented by this escape code ESC1(0×F3) are constituted by the picture [P0_03] not adjacent to the picture [P2_04], i.e., the "far" picture, a picture represented by the escape code ESC2(0×F0), and the picture [P0_05], and multiplied by coefficients d, e, and f determining the blending rates, respectively, then and added to generate the picture [P1_04] represented by the escape code ESC1(0×F3).

Note that the picture represented by the escape code ESC2(0×F0) actually corresponds to the picture [P0_04]. However, this picture [P0_04] is not transmitted, and therefore is represented by the special escape code ESC2(0×F0). In this case, "F" of high-order 4 bits represents a picture not actually transmitted. In addition, "0" of low-order 4 bits represents that a leaf shape will be formed ahead without branches.

The table information associated with "near" and "far" as described above (information indicating the blending rates and information indicating the blending target pictures) is inserted into encoded image data associated with the picture [P2_04], and transmitted to the receiving side, and then utilized as inverse blending process information for obtaining the image data indicating the pictures [P1_04] and [P0_04] on the receiving side.

Moreover, the picture [P1_06] belongs to both "Tree_phase0" and "Tree_phase1." In addition, blending target pictures of this picture are constituted by the picture [P0_05] adjacent to the picture [P1_06], i.e., the "near" picture, a picture represented by the escape code ESC2(0×F0), and the picture [P0_07].

Furthermore, as depicted in the figure, the picture [P1_06] belonging to "Tree_phase0" is generated by multiplying the target pictures by coefficients g0, h0, and i0 determining blending rates, and adding the target pictures. On the other hand, as depicted in the figure, the picture [P1_06] belonging to "Tree_phase1" is generated by multiplying the target pictures by coefficients g1, h1, and i1 determining blending rates, respectively, and adding the target pictures.

Note that the picture represented by the escape code ESC2(0×F0) actually corresponds to the picture [P0806]. However, this picture [P0_06] is not transmitted, and therefore is represented by the special escape code ESC2(0×F0). In this case, "F" of high-order 4 bits represents a picture not actually transmitted. In addition, "0" of low-order 4 bits represents that a leaf shape will be formed ahead without branches.

The table information associated with "near" as described above (information indicating the blending rates and information indicating the blending target pictures) is inserted into encoded image data associated with the picture [P1_06], and transmitted to the receiving side, and then utilized as inverse blending process information for obtaining the image data indicating the picture [P0_06] on the receiving side.

Moreover, the picture [P2_08] belongs to "Tree_phase1." In addition, as depicted in the figure, blending target pictures of this picture are constituted by the picture [P1_06] adjacent to the picture [P2_08], i.e., the "near" picture, a picture represented by the escape code ESC1(0×F3), and the picture [P1_10], and multiplied by coefficients t, u, and v determining the blending rates, respectively, and then added to generate the picture [P2_08].

Note that the picture represented by the escape code ESC1(0×F3) actually corresponds to the picture [P1_08]. However, this picture [P1_08] is not transmitted, and therefore is represented by the special escape code ESC1(0×F3). In this case, "F" of high-order 4 bits represents a picture not actually transmitted. In addition, "3" of the low-order 4 bits represents that three branches are present ahead.

In addition, blending target pictures represented by the escape code ESC1(0×F3) are constituted by the picture [P0_07] not adjacent to the picture [P2_08], i.e., the "far" picture, the picture represented by the escape code ESC2(0×F0), and the picture [P0_09], and multiplied by coefficients m, x, and w determining the blending rates, respectively, and then added to generate the picture represented by the escape code ESC1(0×F3).

Note that the picture represented by the escape code ESC2(0×F0) actually corresponds to the picture [P0_08]. However, this picture [P0_08] is not transmitted, and therefore is represented by the special escape code ESC2(0×F0). In this case, "F" of high-order 4 bits represents a picture not actually transmitted. In addition, "0" of low-order 4 bits represents that a leaf shape will be formed ahead without branches.

The table information associated with "near" and "far" as described above (information indicating the blending rates and information indicating the blending target pictures) is inserted into encoded image data associated with the picture [P2_08], and transmitted to the receiving side, and then utilized as inverse blending process information for obtaining the image data indicating the pictures [P1_08] and [P0_08] on the receiving side.

The necessary inverse blending process is appropriately and easily achievable on the receiving side by inserting the above-described table information (information indicating the blending rates and information indicating the blending target pictures) into the encoded image data associated with the blended images and transmitting the table information.

FIG. 6 depicts an example of a type having three layers and blending with next images. In this example, a basic stream at 60 Hz, a first extended stream at +60 Hz, and a second extended stream at +120 Hz each obtained by processing moving image data at 240 Hz are present. Each of round marks represents image data indicating a corresponding picture, while each of parts defined by broken lines represents image data indicating pictures not actually transmitted. In addition, in the example depicted in the figure, picture IDs each represent a picture associated with the corresponding round mark and located at a position of the corresponding round mark.

Image data indicating the respective pictures of the first extended stream at +60 Hz is blended with image data indicating pictures of the second extended stream at +120 Hz immediately after. For example, image data indicating the picture ID "P1_02" is generated by blending respective image data having picture IDs [P0_02], and [P0_03] at rates e and f, respectively. In this case, the image data having the picture ID [P0_02] is data at the same timing as that of the image data having the picture ID "P1_02," and therefore is not transmitted.

In addition, image data indicating the respective pictures of the basic stream at 60 Hz is blended with image data indicating pictures of the first extended stream at +60 Hz immediately after. For example, image data indicating the picture ID "P2_00" is generated by blending respective image data having picture IDs [P1_00] and [P1_02] at rates a and b, respectively. Image data indicating the picture ID "P1_00" herein is generated by blending respective image data having picture IDs [P0_00] and [P0_01] at rates c and d, respectively. In this case, the image data indicating the respective picture IDs [P0_00] and [P1_00] is data at the same timing as that of the image data indicating the picture ID "P2_00," and therefore is not transmitted.

Image data indicating the picture ID "P2_00" herein is generated by blending respective image data having the picture IDs [P0_00] to [P0_03] in the original moving image data at 240 Hz. In addition, image data indicating next pictures of the basic stream at 60 Hz is generated by blending respective image data having the picture IDs [P0_04] to [P0_07] in the original moving image data at 240 Hz. In this case, "Tree_phase0" continues as depicted in the figure.

The example depicted in the figure is a case where next compatibility between a receiver corresponding to 240 Hz and a receiver corresponding to 120 Hz, and also with a receiver corresponding to 60 Hz are considered. Information indicating blending rates and information indicating blending target pictures are transmitted while added to the image data generated by blending. The receiver corresponding to 60 Hz achieves display at 60 Hz using image data of the basic stream at 60 Hz without change.

In addition, the receiver corresponding to 120 Hz is capable of generating a stream at 120 Hz constituted by the image data indicating the picture ID [P1_00], the image data indicating the picture ID [P1_02], and the like to achieve display at 120 Hz by appropriately performing the inverse blending process while inversely following the tree depicted in the figure. In addition, the receiver corresponding to 240 Hz is also capable of generating a stream at 240 Hz constituted by the image data indicating the picture ID [P0_00], the image data indicating the picture ID [P0_01], the image data indicating the picture ID [P0_02], and the like to achieve display at 240 Hz by appropriately performing the inverse blending process while inversely following the tree depicted in the figure.

FIG. 7 depicts an example of a type having three layers and blending with past images. In this example, there exist a basic stream at 60 Hz, a first extended stream at +60 Hz, and a second extended stream at +120 Hz obtained by processing moving image data at 240 Hz. Each of round marks represents image data indicating a corresponding picture, while each of parts defined by broken lines represents image data indicating pictures not actually transmitted. In addition, in the example depicted in the figure, picture IDs each represent a picture associated with the corresponding round mark and located at a position of the corresponding round mark.

Image data indicating the respective pictures of the first extended stream at +60 Hz is blended with image data indicating pictures of the second extended stream at +120 Hz immediately before. For example, image data indicating the picture ID "P1_00" is generated by blending respective image data having the picture IDs [P0_00] and [P0_01] at rates c and d, respectively. In this case, the image data indicating the picture ID [P0_01] is data at the same timing as that of the image data indicating the picture ID "P1_00," and therefore is not transmitted.

In addition, image data indicating the respective pictures of the basic stream at 60 Hz is blended with image data indicating pictures of the first extended stream at +60 Hz immediately before. For example, image data indicating the picture ID "P2_00" is generated by blending respective image data having picture IDs [P1_00] and [P1_02] at rates a and b, respectively. Image data indicating the picture ID "P1_02" herein is generated by blending respective image data having the picture IDs [P0_02] and [P0_03] at rates e and f, respectively. In this case, the image data indicating the respective picture IDs [P0_03] and [P1_02] is data at the same timing as that of the image data indicating the picture ID "P2_00," and therefore is not transmitted.

Image data indicating the picture ID "P2_00" herein is generated by blending respective image data having the picture IDs [P0_00] to [P0_03] in the original moving image data at 240 Hz. In addition, image data indicating next pictures of the basic stream at 60 Hz is generated by blending respective image data having the picture IDs [P0_04] to [P0_07] in the original moving image data at 240 Hz. In this case, "Tree_phase0" continues as depicted in the figure.

The example depicted in the figure is a case where next compatibility between a receiver corresponding to 240 Hz and a receiver corresponding to 120 Hz, and also with a receiver corresponding to 60 Hz are considered. Information indicating blending rates and information indicating blending target pictures are transmitted while added to the image data generated by blending. The receiver corresponding to 60 Hz achieves display at 60 Hz using image data of the basic stream at 60 Hz without change.

In addition, the receiver corresponding to 120 Hz is capable of generating a stream at 120 Hz constituted by the image data indicating the picture ID [P1_00], the image data indicating the picture ID [P1_02], and the like to achieve display at 120 Hz by appropriately performing the inverse blending process while inversely following the tree depicted in the figure. In addition, the receiver corresponding to 240 Hz is also capable of generating a stream at 240 Hz constituted by the image data indicating the picture ID [P0_00], the image data indicating the picture ID [P0_01], the image data indicating the picture ID [P0_02], and the like to achieve display at 240 Hz by appropriately performing the inverse blending process while inversely following the tree depicted in the figure.

A calculation target designation table of respective pictures (see FIG. 5) may be considered in the examples of FIGS. 6 and 7 similarly to the example of FIG. 4. However, description of this table is not repeated herein. In the examples of FIGS. 6 and 7, the necessary inverse blending process is also appropriately and easily achievable on the receiving side by inserting the table information (information indicating the blending rates and information indicating the blending target pictures) into the encoded image data associated with the blended images, and transmitting the table information.

According to this embodiment, blend target information SEI message (Blending_information SEI message), which is newly defined, is inserted into a part corresponding to "SEIs" of an access unit (AU) to insert the table information (information indicating the blending rates and information indicating the blending target pictures) into encoded image data.

FIG. 8 depicts a structure example (Syntax) of the blend target information SEI message in a case where the information indicating a blending target picture includes a picture ID, while FIG. 9 depicts details (Semantics) of main information in this structure example. A field corresponding to "blend_target_information_id" is identification information indicating that this field is the blend target information SEI message. An 8-bit field corresponding to "blend_target_information_length" indicates a byte size of the blending target information SEI message.

An 8-bit field corresponding to "picture_id" indicates a picture ID for identifying a current picture. In this case, "0×F*" may be used as an escape code representing a picture not transmitted. Accordingly, the use of this code as a picture ID is prohibited. A 1-bit field corresponding to "blending_flag" is a flag indicating whether or not blending has been performed. For example, "1" indicates that blending has been performed, while "0" indicates that blending has not been performed.

"while statement" continuously circulates until the byte size becomes a size corresponding to the blend target information SEI message. A 1-bit field corresponding to "blend_tree_phase" is toggle information indicating a group of blending trees. For example, "0" represents "Tree_phase0," while "1" represents "Tree_phase1." A 4-bit field corresponding to "number_of_nodes" represents the number of nodes (the number of pictures included in the tree). Following "for loop" circulates by this number of nodes.

An 8-bit field corresponding to "blending_coefficient" represents a coefficient value indicating a blending rate (blending ratio). An 8-bit field corresponding to "target_picture_id" represents a picture ID of a blending target picture. When the high-order 4-bit value of "target_picture_id" herein is "F," each of the 8-bit fields of "blending_coefficient" and "target_picture_id" is repeated by the number of "*" represented by the low-order 4 bits.

Note that a picture in a case where "target_picture_id" indicates "0×F*" represents a picture not transmitted, and also indicates that a value of this picture is reflected in a picture as a reference source.

According to the example described above, information indicating a blending target picture includes a picture ID (picture identification information) individually given to a corresponding picture. However, it is also considered that information indicating a blending target picture is information designating a time position relationship between pictures.

FIG. 10 depicts an example of a type having three layers and blending with past and next images. This example corresponds to the example of FIG. 4 described above. However, while a blending target picture in the example of FIG. 4 is represented by a picture ID, a blending target picture in the example of FIG. 10 is represented by information indicating a time position relationship between pictures.

In this example, a basic stream at 60 Hz, a first extended stream at +60 Hz, and a second extended stream at +120 Hz obtained by processing moving image data at 240 Hz are present. In this case, the layer of the basic stream at 60 Hz corresponds to a lowest layer 2 "Dlayer 2," the layer of the first extended stream at +60 Hz corresponds to a layer 1 "Dlayer1" above the layer 2, and the layer of the second extended stream at +120 Hz corresponds to a layer 0 "Dlayer0" above the layer 1. Each of round marks represents image data indicating a corresponding picture, while each of parts defined by broken lines represents image data indicating pictures not actually transmitted. In addition, information indicating a position relationship between pictures (past (P), current (C), and next (N)) is given in correspondence with each round mark.

Image data indicating the respective pictures of the first extended stream at +60 Hz is blended with image data indicating the pictures of the second extended stream at +120 Hz immediately before and immediately after. For example, image data indicating respective pictures is generated by blending, at predetermined rates, image data indicating respective pictures located at a past (P) position, a current (C) position, and a next (N) position in terms of time in original moving image data at 240 Hz. In this case, image data indicating pictures of original moving image data at 240 Hz at the same timing as the timing of the pictures of the first extended stream at +60 Hz in terms of time is not transmitted.

In addition, image data indicating the respective pictures of the basic stream at 60 Hz is blended with image data indicating pictures of the first extended stream at +60 Hz immediately before and immediately after. For example, image data indicating respective pictures is generated by blending, at predetermined rates, image data indicating respective pictures located at a past (P) position, a current (C) position, and a next (N) position in terms of time in moving image data at 120 Hz. In this case, image data indicating pictures of original moving image data at 120 Hz at the same timing as the timing of the pictures of the first extended stream at 60 Hz in terms of time is not transmitted.

In the example of FIG. 10, "Tree_phase0" and "Tree_phase1" are alternately repeated in a toggled manner to arrange respective pictures of the basic stream at 60 Hz at equal intervals similarly to the example of FIG. 4 described above.

A table in FIG. 11 represents a calculation target designation table of respective pictures corresponding to the example of FIG. 10. An initial picture of Dlayer1 belongs to "Tree_phase0." In addition, blending target pictures of this picture are constituted by pictures at positions (Derection_type) of a past (P) position, a current (C) position, and a next (N) position in terms of time adjacent to the initial picture of Dlayer1, i.e., "near" pictures in original moving image data at 240 Hz of Dlayer0, and multiplied by coefficients a, b, and c determining blending rates, respectively, and then added to generate the initial picture of Dlayer1.

Note that the current (C) position is represented by the escape code ESC2(0×F0). In this case, "F" of high-order 4 bits represents a picture not actually transmitted. In addition, "0" of low-order 4 bits represents that a leaf shape will be formed ahead without branches.

The table information associated with "near" as described above (information indicating the blending rates and information indicating the blending target pictures is inserted into encoded image data associated with the initial picture of Dlayer1, and transmitted to the receiving side, and then utilized as inverse blending process information for obtaining image data indicating pictures of Dlayer0 represented by the escape code ESC2(0×F0) on the receiving side.

In addition, an initial picture of Dlayer2 belongs to "Tree_phase0." Moreover, as depicted in the figure, blending target pictures of this picture are constituted by position pictures at a past (P) position, a current (C) position, and a next (N) position in terms of time adjacent to the initial picture of Dlayer2, i.e., "near" pictures in moving image data at 120 Hz of Dlayer1, and multiplied by coefficients j, k, and 1 determining blending rates, respectively, and then added to generate the initial picture of Dlayer2.

Note that the current (C) position is represented by the escape code ESC2(0×F3). In this case, "F" of high-order 4 bits represents a picture not actually transmitted. In addition, "3" of the low-order 4 bits represents that three branches are present ahead.

Furthermore, as depicted in the figure, blending target pictures of a picture at a position represented by the escape code ESC1(0×F3) are constituted by position pictures at a past (P) position, a current (C) position, and a next (N) position in terms of time not adjacent to the initial picture of Dlayer2, i.e., "far" pictures in original moving image data at 240 Hz of Dlayer0, and multiplied by coefficients d, e, and f determining blending rates, respectively, and then added to generate a pictures located at a position represented by the escape code ESC1(0×F3).

Note that the current (C) position is represented by the escape code ESC2(0×F0). In this case, "F" of high-order 4 bits represents a picture not actually transmitted. In addition, "0" of low-order 4 bits represents that a leaf shape will be formed ahead without branches.

The table information associated with "near" and "far" as described above (information indicating the blending rates and information indicating the blending target pictures) is inserted into encoded image data associated with the initial picture of Dlayer2, and transmitted to the receiving side, and then utilized as inverse blending process information for obtaining image data indicating pictures located at the positions represented by the escape code ESC1(0×F3) and the escape code ESC2(0×F0) on the receiving side.

Moreover, a second picture of Dlayer1 belongs to both "Tree_phase0" and "Tree_phase1." In addition, blending target pictures of this picture are constituted by position pictures at a past (P) position, a current (C) position, and a next (N) position in terms of time adjacent to the second picture of Dlayer1, i.e., a "near" picture in original moving image data at 240 Hz of Dlayer0.

Furthermore, as depicted in the figure, the pictures belonging to "Tree_phase0" are generated by multiplying the target pictures by coefficients g0, h0, and i0 determining blending rates, respectively, and adding the multiplied target pictures. On the other hand, as depicted in the figure, the pictures belonging to "Tree_phase1" are generated by multiplying the target pictures by coefficients g1, h1, and i1 determining blending rates, respectively, and adding the multiplied target pictures.

Note that the current (C) position is represented by the escape code ESC2(0×F0). In this case, "F" of high-order 4 bits represents a picture not actually transmitted. In addition, "0" of low-order 4 bits represents that a leaf shape will be formed ahead without branches.

The table information associated with "near" as described above (information indicating the blending rates and information indicating the blending target pictures is inserted into encoded image data associated with the second picture of Dlayer1, and transmitted to the receiving side, and then utilized as inverse blending process information for obtaining the image data indicating pictures of Dlayer0 represented by the escape code ESC2(0×F0) on the receiving side.

Moreover, a second picture of Dlayer2 belongs to "Tree_phase1." In addition, as depicted in the figure, blending target pictures of this picture are constituted by position pictures at a past (P) position, a current (C) position, and a next (N) position in terms of time adjacent to the second picture of Dlayer2, i.e., a "near" picture in moving image data indicating pictures at 120 Hz of Dlayer1, and multiplied by coefficients t, u, and v determining blending rates, respectively, and then added to generate the second picture of Dlayer2.

Note that the current (C) position is represented by the escape code ESC2(0×F3). In this case, "F" of high-order 4 bits represents a picture not actually transmitted. In addition, "3" of the low-order 4 bits represents that three branches are present ahead.

In addition, as depicted in the figure, blending target pictures of pictures at a position represented by the escape code ESC1(0×F3) are constituted by position pictures at a past (P) position, a current (C) position, and a next (N) position in terms of time not adjacent to the second picture of Dlayer2, i.e., "far" pictures in original moving image data at 240 Hz of Dlayer0, and multiplied by coefficients m, x, and w determining blending rates, respectively, and then added to generate the picture located at the position represented by the escape code ESC1(0×F3).

Note that the current (C) position is represented by the escape code ESC2(0×F0). In this case, "F" of high-order 4 bits represents a picture not actually transmitted. In addition, "0" of low-order 4 bits represents that a leaf shape will be formed ahead without branches.

The table information associated with "near" and "far" as described above (information indicating the blending rates and information indicating the blending target pictures) is inserted into encoded image data associated with the second picture of Dlayer2, and transmitted to the receiving side, and then utilized as inverse blending process information for obtaining the image data indicating the pictures located at the positions represented by the escape code ESC1(0×F3) and the escape code ESC2(0×F0) on the receiving side.

The necessary inverse blending process is appropriately and easily achievable on the receiving side by inserting the above-described table information (information indicating the blending rates and information indicating the blending target pictures) into the encoded image data associated with the blended images and transmitting the table information.

FIG. 12 depicts a structure example (Syntax) of the blend target information SEI message in a case where the information indicating the blending target pictures is information indicating a time position relationship between pictures, while FIG. 13 depicts details (Semantics) of main information in this structure example. A field corresponding to "blend_target_information_id" is identification information indicating that this field is the blend target information SEI message. An 8-bit field corresponding to "blend_target_information_length" indicates a byte size of the blend target information SEI message.

An 8-bit field corresponding to "Dlayer_id" indicates a Dlayer value to which a current picture belongs. A 1-bit field corresponding to "blending_flag" is a flag indicating whether or not blending has been performed. For example, "1" indicates that blending has been performed, while "0" indicates that blending has not been performed.

"while statement" continuously circulates until the byte size becomes a size corresponding to the blending target information SEI message. A 1-bit field corresponding to "blend_tree_phase" is toggle information indicating a group of blending trees. For example, "0" represents "Tree_phase0," while "1" represents "Tree_phase1." A 4-bit field corresponding to "number_of_nodes" represents the number of nodes (the number of pictures included in the tree). Following "for loop" circulates by this number of nodes.

An 8-bit field corresponding to "blending_coefficient" represents a coefficient value indicating a blending rate (blending ratio). An 8-bit field corresponding to "target_Dlayer_id" indicates a Dlayer value of a blending target picture. An 8-bit field corresponding to "direction_type" indicates a relative position relationship in terms of time. For example, "0×01" represents a past position (Past), "0×02" represents a current position (Current), and "0×03" represents a next position (Next). In a case where a value of high-order 4 bits of "direction_type" is "F" herein, a picture located at the corresponding position represents a picture not transmitted, and also indicates that a value of this picture is reflected in a picture as a reference source.

Returning to FIG. 1, the transmission device 200 inserts type information indicating the number of layers for layer encoding and the direction of blending into a layer of a container. According to this embodiment, a blend type descriptor (blend_type_descriptor), which is newly defined, into a video elementary stream loop disposed in correspondence with respective video streams (basic stream and extended streams) of a program map table (PMT: Program Map Table). In this manner, the number of layers for layer encoding and the direction of blending are recognizable without decoding the basic stream and the predetermined number of extended streams on the receiving side.

FIG. 14(a) depicts a structure example (Syntax) of a blend type descriptor. FIG. 14(b) depicts contents (Semantics) of main information in this structure example. An 8-bit field corresponding to "blend_type_descriptor_tag" represents a descriptor type, indicating herein that this descriptor is a blend type descriptor. An 8-bit field corresponding to "blend_type_descriptor_length" represents a length (size) of the descriptor, indicating the following byte number as a length of the descriptor.

An 8-bit field corresponding to "blend_type" indicates a type of a blend tree. For example, "0×00" represents a type having two layers and blending with next images (see FIG. 2(a)), "0×01" represents a type having two layers and blending with past images (see FIG. 2(b)), "0×02" represents a type having two layers and blending with past and next images, "0×03" represents a type having three layers and blending with next images (see FIGS. 3(a), 3(b), and 6), "0×04" represents a type having three layers and blending with past images (see FIG. 7), and "0×05" represents a type having three layers and blending with past and next images (see FIGS. 4 and 10).

An 8-bit field corresponding to "Dlayer" indicates a Dlayer value to which a sub-stream belongs. For example, "0×0" represents "0 (highest layer: Dlayer0)," "0×1" represents "1 (second highest layer: Dlayer1)," and "0×2 represents "2 (third highest layer: Dlayer2)."

Returning to FIG. 1, the TV receiver 200 receives the above-mentioned transport stream TS transmitted while carried on a broadcast wave. In a case where the TV receiver 200 has a decoding capability for processing moving image data at a normal frame rate (60 Hz), the TV receiver 200 processes only the basic stream included in the transport stream TS, and obtains moving image data at the normal frame rate to reproduce images. In this case, the TV receiver 200 decodes the basic stream to obtain image data indicating respective frames at the normal frame rate.

On the other hand, in a case where the TV receiver 200 has a decoding capability for processing moving image data at a high frame rate (120 Hz or 240 Hz), the TV receiver 200 processes both the basic stream and the extended streams included in the transport stream TS, and obtains moving image data at the high frame rate to reproduce images.

In this case, the TV receiver 200 decodes the basic stream to obtain image data indicating respective pictures at the normal frame rate, and also decodes the extended streams to obtain image data indicating respective extended pictures at the high frame rate. Thereafter, the TV receiver 200 appropriately performs the inverse blending process on the basis of information indicating blending rates and information indicating blending target pictures using the image data indicating the respective pictures at the normal frame rate and the image data indicating the respective extended pictures at the high frame rate to obtain blending-cancelled moving image data at the high frame rate.

FIG. 15 depicts an example of a processing outline of the transmission device 100 and the TV receiver 200. Note that an image sequence Q output from a preprocessor 102 of the transmission device 100 and an image sequence Q output from a decoder 204 of a TV receiver 200A are identical to each other in terms of time series. However, the respective image sequences Q pass through a codec, and therefore form images having image qualities different from each other in some cases.

According to the transmission device 100, the preprocessor 102 blends image data indicating respective pictures constituting moving image data P at a high frame rate of 240 Hz to obtain blended moving image data Q at 240 Hz constituted by image data Qb indicating respective pictures of a basic stream at 60 Hz, image data Qe1 indicating respective pictures of a first extended stream at +60 Hz, and image data Qe2 indicating respective pictures of a second extended stream at +120 Hz (see FIGS. 4 and 10).

According to the transmission device 100, an encoder 103 layer-encodes the moving image data Q (Qb, Qe1, and Qe2) to obtain a basic stream STb, a first extended stream STe1, and a second extended stream STe2. The streams STb, STe1, and STe2 are transmitted from the transmission device 100 to the TV receiver 200. Note that information indicating blending rates and information indicating blending target pictures are inserted into encoded image data associated with pictures of blended images in the streams STb, STe1, and STe2.

According to the TV receiver 200A having a decoding capability for processing moving image data at 240 Hz, the decoder 204 decodes the three streams STb, STe1, and STe2 to obtain blended moving image data at 240 Hz constituted by the image data Qb, Qe1, and Qe2. Moreover, according to the reception device 200A, a postprocessor 205 appropriately performs the inverse blending process (blending cancellation process) on the basis of the information indicating blending rates and the blending target pictures to obtain moving image data at 240 Hz which is blending-cancelled and similar to the moving image data P at 240 Hz on the transmitting side. The moving image data 240 thus obtained becomes moving image data for display without change, or after frame interpolation by an MCFI (Motion Compensated Frame Insertion) unit 206 for increasing a frame rate.

In addition, according to a TV receiver 200B having a decoding capability for processing moving image data at 120 Hz, the decoder 204 decodes the two streams STb and STe1 to obtain blended moving image data at 120 Hz constituted by the image data Qb and Qe1. Moreover, according to the reception device 200B, the postprocessor 205 appropriately performs the inverse blending process (blending cancellation process) on the basis of the information indicating blending rates and the blending target pictures to obtain moving image data at 120 Hz. The moving image data 120 thus obtained becomes moving image data for display without change, or after frame interpolation by the MCFI unit 206 for increasing a frame rate.

Furthermore, according to a TV receiver 200C having a decoding capability for processing moving image data at 60 Hz, the decoder 204 decodes the stream STb to obtain the image data Qb. Moreover, according to the reception device 200C, the moving image data thus obtained and constituted by the image data Qb becomes moving image data for display without change, or after frame interpolation at an MCFI unit 206C for increasing a frame rate.

"Configuration of transmission device"

FIG. 16 depicts a configuration example of the transmission device 100. The transmission device 100 includes a control unit 101, the preprocessor 102, the encoder 103, a multiplexer 104, and a transmission unit 105. The control unit 101 controls operations of respective units of the transmission device 100.

The preprocessor 102 inputs the moving image data P at a high frame rate of 240 Hz, and outputs the blended moving image data Q at 240 Hz constituted by the image data Qb indicating respective pictures of a basic stream at 60 Hz, the image data Qe1 indicating respective pictures of the first extended stream at +60 Hz, and the image data Qe2 indicating respective pictures of the second extended stream at +120 Hz (see FIGS. 4 and 10). The preprocessor 102 is constituted by a filter including a plurality of taps, for example, and is capable of achieving blending by changing coefficients of the respective taps for each picture and blending image data indicating peripheral pictures at blending rates independent for each picture.

In this case, the preprocessor 102 blends image data indicating respective pictures of the moving image data P with image data indicating peripheral pictures at blending rates independent for each picture to obtain the blending-cancelled moving image data Q at 240 Hz. In this case, the image data Qb indicating the respective pictures of the basic stream at 60 Hz and the image data Qe1 indicating the respective pictures of the first extended stream at +60 Hz are blended with each other. However, the image data indicating the respective pictures of the second extended stream at +120 Hz is not blended (see FIGS. 4 and 10).

The encoder 103 layer-encodes the moving image data Q (Qb, Qe1, and Qe2) to obtain the basic stream STb, the first extended stream STe1, and the second extended stream STe2. In this case, the encoder 103 performs a prediction encoding process such as H. 264/AVC and H. 265/HEVC for the moving image data Q.

At this time, the encoder 102 inserts the blend target information SEI message described above (see FIGS. 8 and 12) into encoded image data indicating the respective pictures. In this manner, information indicating blending rates and information indicating blending target pictures are added to the encoded image data indicating the pictures of the blended images. Accordingly, on the basis of the respective information, on the receiving side, it can be recognized that which of the image data indicating the peripheral pictures is blended with the image data indicating the pictures of the blended images and what blending rates of these image data are applied. As a result, the inverse blending process (blending cancellation process) is appropriately and easily achievable.

The multiplexer 104 converts the basic stream STb, the first extended stream STe1, and the second extended stream STe2 generated by the encoder 103 into a PES (Packetized Elementary Stream) packet, and further converts the PES packet into a transport packet and multiplexes the transport packet to obtain the transport stream TS as a multiplexed stream.

At this time, the multiplexer 104 inserts the blend type descriptor described above (see FIG. 14(a)) into a video elementary stream loop disposed in correspondence with each stream of a program map table (PMT). In this manner, the number of layers for layer encoding and the direction of blending can be recognized on the receiving side, i.e., a blend type, without decoding the respective streams.

The transmission unit 105 modulates the transport stream TS using a modulation method suited for broadcasting such as QPSK/OFDM, for example, and transmits an RF modulation signal from a transmission antenna.

FIG. 17 depicts a configuration example of the transport stream TS. The transport stream TS includes three streams (sub-streams) constituted by the basic stream (base stream) STb, the first extended stream (first enhance stream) STe1, the second extended stream (second enhance stream) STe2.

More specifically, according to this configuration example, there exist a PES packet "video PES1" of the basic stream STb identified by a packet identifier "PID1," a PES packet "video PES2" of the first extended stream STe1 identified by a packet identifier "PID2," and a PES packet "video PES3" of the second extended stream STe2 identified by a packet identifier "PID3."

The target information SEI message described above (see FIGS. 8 and 12) is inserted into encoded image data indicating respective pictures contained in containers of the PES packets "video PES1," "video PES2," and "video PES3."

In addition, the transport stream TS includes PMT (Program Map Table) as one of PSI (Program Specific Information). This PSI is information describing to what program respective elementary streams included in the transport stream belongs.

A program loop describing information associated with the entire program is present in the PMT. Moreover, a video elementary stream loop retaining information associated with respective video streams is present in the PMT. According to this configuration example, there exist a video elementary stream loop "video ES1 loop" corresponding to the basic stream STb, a video elementary stream loop "video ES2 loop" corresponding to the first extended stream STe1, and a video elementary stream loop "video ES3 loop" corresponding to the second extended STe2.

In "video ES1 loop," there is disposed information such as a stream type and a packet identifier (PID) in correspondence with the basic stream STb (video PES1), and also a descriptor which describes information associated with the corresponding video stream. The stream type is represented as "$0\times24$" indicating the basic stream in a case of HEVC encoding. In addition, a blend type descriptor (see FIG. 14(a)) is disposed as one of descriptors. A Dlayer value to which a sub-stream indicated in a field of "Dlayer" of this descriptor belongs is represented as "$0\times2$" indicating a layer of the basic stream.

Moreover, in "video ES2 loop," there is disposed information such as a stream type and a packet identifier (PID) in correspondence with the first extended stream STe1 (video PES2), and also a descriptor which describes information associated with the corresponding video stream. The stream type is represented as "$0\times25$" indicating the extended stream in a case of HEVC encoding. In addition, a blend type descriptor (see FIG. 14(a)) is disposed as one of descriptors. A Dlayer value to which a sub-stream indicated in a field of "Dlayer" of this descriptor belongs is represented "as $0\times1$" indicating a layer of the first extended stream.

Furthermore, in "video ES3 loop," there is disposed information such as a stream type and a packet identifier (PID) in correspondence with the second extended stream STe2 (video PES3), and also a descriptor which describes information associated with the corresponding video stream. The stream type is represented as "$0\times25$" indicating the extended stream in a case of HEVC encoding. In addition, a blend type descriptor (see FIG. 14(a)) is disposed as one of descriptors. A Dlayer value to which a sub-stream indicated in a field of "Dlayer" of this descriptor belongs is represented as "$0\times0$" indicating a layer of the second extended stream.

An operation of the transmission device 100 depicted in FIG. 16 will be briefly described. The moving image data P at 240 Hz is input to the preprocessor 102. The preprocessor 102 blends the image data P to obtain the blended moving image data Q at 240 Hz constituted by the image data Qb indicating respective pictures of a basic stream at 60 Hz, the image data Qe1 indicating respective pictures of the first extended stream at +60 Hz, and the image data Qe2 indicating respective pictures of the second extended stream at +120 Hz (see FIGS. 4 and 10).

The moving image data Q (Qb, Qe1, and Qe2) at 240 Hz obtained by the preprocessor 102 is supplied to the encoder 103. The encoder 103 layer-encodes the moving image data Q to obtain the basic stream STb, the first extended stream STe2, and the second extended stream STe2. At this time, the encoder 103 inserts the blend target information SEI message (see FIGS. 8 and 12) into encoded image data indicating the respective pictures.

The basic stream STb, the first STe2, and the second extended stream STe2 generated by the encoder 103 are supplied to the multiplexer 104. The multiplexer 104 converts the respective streams into a PES packet, and further converts the PES packet into a transport packet and multiplexes the transport packet to obtain the transport stream TS as a multiplexed stream. At this time, the multiplexer 104 inserts the blend type descriptor (see FIG. 14(a)) into the video elementary stream loop disposed in correspondence with each stream of the program map table (PMT).

The transport stream TS generated by the multiplexer 104 is transmitted to the transmission unit 105. The transmission unit 105 modulates the transport stream TS using a modulation method suited for broadcasting such as QPSK/OFDM, for example, and transmits an RF modulation signal thus obtained from the transmission antenna.

"Configuration of TV receiver"

FIG. 18 depicts a configuration example of the TV receiver 200A having a decoding capability for processing moving image data at 240 Hz. The TV receiver 200A includes a control unit 201, a reception unit 202, a demultiplexer 203, the decoder 204, the postprocessor 205, the MCFI unit 206, and a panel display unit 207.

The control unit 201 controls operations of respective units of the TV receiver 200A. The reception unit 202 demodulates an RF modulation signal received via a reception antenna to obtain the transport stream TS. The demultiplexer 203 extracts the basic stream STb, the first extended stream STe1, and the second extended stream STe2 from the transport stream TS by filtering a PID, and supplies the extracted streams to the decoder 204.

The demultiplexer 203 also extracts section information included in the transport stream TS, and transmits the extracted section information to the control unit 201. In this case, the bland type descriptor (see FIG. 14(a)) is also extracted. In this manner, the control unit 201 can recognize the number of layers for layer encoding and the direction of blending, i.e., the blend type, and therefore appropriately and easily control the inverse blending process (blending cancellation process) performed by the postprocessor 205.

The decoder 204 decodes the streams STb, STe1, and STe2 to obtain the image data Qb indicating the respective pictures of the basic stream at 60 Hz, the image data Qe1 indicating the respective pictures of the first extended stream at +60 Hz, and the image data Qe2 indicating the respective pictures of the second extended stream at +120 Hz.

The decoder 204 also extracts a parameter set and SEI inserted into respective access units constituting the streams STb, STe1, and STe2, and transmits the extracted parameter set and SEI to the control unit 201. In this case, the target information SEI message (see FIGS. 8 and 12) including information indicating the blending rates and information indicating the blending target pictures are also extracted. In this manner, the control unit 201 can recognize which of the image data indicating the peripheral pictures is blended with the image data indicating the pictures of the blended images and what blending rates of these image data are applied. Accordingly, the inverse blending process (blending cancellation process) performed by the postprocessor 205 is appropriately and easily controllable.

The postprocessor 205 appropriately performs the inverse blending process (blending cancellation process) for the image data Qb, Qe1, and Qe2 obtained by the decoder 204 on the basis of the information indicating blending rates and the blending target pictures under control by the control unit 201 to obtain blending-cancelled moving image data at 240 Hz. The postprocessor 205 is constituted by a filter including a plurality of taps, for example, and is capable of achieving blending cancellation by changing coefficients of the respective taps for each picture and blending image data indicating peripheral pictures at blending rates independent for each picture.

The MCFI unit 206 performs frame interpolation of motion compensation for the moving image data at 240 Hz obtained by the postprocessor 205 to obtain moving image data at a higher frame rate. Note that the MCFI unit 206 is not provided in some cases. The panel display unit 207 displays images corresponding to the moving image data at 240 Hz obtained by the postprocessor 205 or the moving image data at a higher frame rate obtained by the MCFI unit 206.

An operation of the TV receiver 200A depicted in FIG. 18 will be briefly described. The reception unit 202 demodulates the RF modulation signal received via the reception antenna to obtain the transport stream TS. The transport stream TS is transmitted to the demultiplexer 203. The demultiplexer 203 extracts the basic stream STb, the first extended stream STe1, and the second extended stream STe2 from the transport stream TS by filtering a PID, and supplies the extracted streams to the decoder 204.

The demultiplexer 203 also extracts section information included in the transport stream TS, and transmits the extracted information to the control unit 201. In this case, the bland type descriptor (see FIG. 14(a)) is also extracted. In this manner, the control unit 201 recognizes the number of layers for layer encoding and the direction of blending, i.e., the blend type.

The decoder 204 decodes the streams STb, STe1, and STe2 to obtain the image data Qb indicating the respective pictures of the basic stream at 60 Hz, the image data Qe1 indicating the respective pictures of the first extended stream at +60 Hz, and the image data Qe2 indicating the respective pictures of the second extended stream at +120 Hz.

The decoder 204 also extracts a parameter set and SEI inserted into respective access units constituting the streams STb, STe1, and STe2, and transmits the extracted parameter set and SEI to the control unit 201. In this case, the target information SEI message (see FIGS. 8 and 12) including information indicating the blending rates and information indicating the blending target pictures are also extracted. In this manner, the control unit 201 can recognize which of the image data indicating the peripheral pictures is blended with the image data indicating the pictures of the blended images and what blending rates of these image data are applied.

The moving image data Qb, Qe1, and Qe2 obtained by the decoder 204 is supplied to the postprocessor 205. The postprocessor 205 appropriately performs the inverse blending process (blending cancellation process) for the image data Qb, Qe1, and Qe2 on the basis of the information indicating blending rates and the blending target pictures under control by the control unit 201 to obtain blending-cancelled moving image data at 240 Hz.

The blending-cancelled moving image data at 240 Hz obtained by the postprocessor 205, or the moving image data at a higher frame rate obtained by the MCFI unit 206 is supplied to the panel display unit 207. The panel display unit 207 displays images corresponding to this moving image data.

A configuration of the TV receiver 200B having a decoding capability for processing moving image data at 120 Hz is similar to the configuration of the TV receiver 200A of FIG. 18. In a case of the TV receiver 200B, the demultiplexer 203 extracts the basic stream STb and the first extended stream STe1 from the transport stream TS by filtering a PID, and supplies the extracted streams to the decoder 204.

In addition, in the case of the TV receiver 200B, the decoder 204 decodes the streams STb and STe1 to obtain the image data Qb indicating the respective pictures of the basic stream at 60 Hz, and the image data Qe1 indicating the respective pictures of the first extended stream at +60 Hz. Moreover, in the case of the TV receiver 200B, the postprocessor 205 appropriately performs the inverse blending process (blending cancellation process) for the image data Qb and Qe1 on the basis of the information indicating blending rates and the information indicating the blending target pictures under control by the control unit 201 to obtain blending-cancelled moving image data at 120 Hz.

Furthermore, in the case of the TV receiver 200B, the blending-cancelled moving image data at 120 Hz obtained by the postprocessor 205 or the moving image data at a higher frame rate obtained by the MCFI unit 206 is supplied to the panel display unit 207. The panel display unit 207 displays images corresponding to this moving image data.

FIG. 19 depicts a configuration example of the TV receiver 200C having a decoding capability for processing moving image data at 60 Hz. The TV receiver 200C includes the control unit 201, the reception unit 202, the demultiplexer 203, the decoder 204, the MCFI unit 206, and the panel display unit 207.

The control unit 201 controls operations of respective units of the TV receiver 200C. The reception unit 202 demodulates the RF modulation signal received via the reception antenna to obtain the transport stream TS. The demultiplexer 203 extracts the basic stream STb from the transport stream TS by filtering a PID, and supplies the extracted stream to the decoder 204. The decoder 204 decodes the basic stream STb to obtain the image data Qb indicating the respective pictures of the basic stream at 60 Hz as moving image data at 60 Hz.

The MCFI unit 206 performs frame interpolation of motion compensation for the moving image data at 60 Hz to obtain moving image data at a higher frame rate. Note that the MCFI unit 206 is not provided in some cases. The panel display unit 207 displays images corresponding to the moving image data at 60 Hz obtained by the decoder 204 or the moving image data at a higher frame rate obtained by the MCFI unit 206.

An operation of the TV receiver 200C depicted in FIG. 19 will be briefly described. The reception unit 202 demodulates the RF modulation signal received via the reception antenna to obtain the transport stream TS. The transport stream TS is transmitted to the demultiplexer 203. The demultiplexer 203 extracts the basic stream STb from the transport stream TS by filtering a PID, and supplies the extracted stream to the decoder 204.

The decoder 204 decodes the stream STb to obtain moving image data at 60 Hz. The moving image data at 60 or the moving image data at a higher frame rate obtained by the MCFI unit 206 is supplied to the panel display unit 207. The panel display unit 207 displays images corresponding to this moving image data.

According to the transmission and reception system 10 depicted in FIG. 1, as described above, information indicating blending rates and information indicating blending target pictures are transmitted while inserted into encoded image data indicating pictures of blended images of a basic stream and extended streams. Accordingly, the inverse blending process can be appropriately and easily performed on the receiving side on the basis of the information indicating the blending rates and the information indicating the blending target pictures, and therefore can obtain moving image data at a high frame rate in a preferable manner.

<2. Second Embodiment>

[Transmission and reception system]

While the example of the transmission and reception system 10 constituted by the transmission device 100 and the TV receiver 200 has been described in the above embodiment, the configuration of the transmission and reception system to which the present technology is applicable is not limited to this example. Also considered is such a configuration that the part of the TV receiver 200 is constituted by a set top box and a display connected via a digital interface, such as HDMI (High-Definition Multimedia Interface). Note that "HDMI" is a registered trademark.

FIG. 20 depicts a configuration example of a transmission and reception system 10A according to a second embodiment. The transmission and reception system 10A includes the transmission device 100, a set top box (STB) 200-1, and a display 200-2. The set top box (STB) 200-1 and the display 200-2 are connected to each other via HDMI. Note that the digital interface constituted by HDMI in this example may be a digital interface in a different format.

The transmission device 100 is similar to the transmission device 100 of the transmission and reception system 10 depicted in FIG. 1. Accordingly, the same description is not repeated herein. The set top box 200-1 receives the above-mentioned transport stream TS transmitted from the transmission device 100 while carried on a broadcast wave.

In a case where the display 200-2 is capable of handling moving image data at a high frame rate (240 Hz or 120 Hz), the set top box 200-1 processes both a basic stream and an extended stream included in the transport stream TS to obtain blended moving image data at a high frame rate of 240 Hz or 120 Hz.

In a case where the display 200-2 has a function of performing an inverse blending process (blending cancellation process), the set top box 200-1 transmits blended moving image data at a high frame rate, and information indicating blending rates of respective pictures and information indicating blending target pictures to the display 200-2 via an HDMI transmission path. In this case, the information indicating the blending rates of the respective pictures and the information indicating the blending target pictures are transmitted while inserted into blanking periods of the image data indicating the respective pictures.

In addition, in a case where the display 200-2 does not have the function of the inverse blending process (blending cancellation process), the set top box 200-1 performs an inverse blending process (blending cancellation process) for the blended moving image data at the high frame rate on the basis of the information indicating the blending rates of the respective pictures and the information indicating the blending target pictures to obtain blending-cancelled moving image data at the high frame rate, and transmits the moving image data to the display 200-2 via the HDMI transmission path.

On the other hand, in a case where the display 200-2 can handle only moving image data at 60 Hz, the set top box 200-1 processes only the basic stream STb included in the transport stream TS to obtain moving image data at 60 Hz. Thereafter, the set top box 200-1 transmits the obtained moving image data at 60 Hz to the display 200-2 via the HDMI transmission path.

The set top box 200-1 functioning as a source device obtains an EDID from the display 200-2 functioning as a sink device, and determines whether or not the display 200-2 can handle moving image data at a high frame rate (240 Hz or 120 Hz), and determines whether or not the display 200-2 has a function of the inverse blending process (blending cancellation process).

A flowchart of FIG. 21 depicts an example of control processing procedures performed by a control unit (CPU) of the set top box 200-1. In step ST1, the control unit initially starts a control process. In subsequent step ST2, the control unit reads an EDID from the display 200-2 and checks the EDID. Thereafter, the control unit in step ST3 determines whether or not the display 200-2 is capable of handling moving image data at a high frame rate (240 Hz or 120 Hz).

When this handling is not allowed, the control unit decodes only the basic stream STb in step ST4, and transmits moving image data at 60 Hz constituted by the moving image data Qb at 60 Hz of the basic stream to the set top box 200-1. After the processing in step ST4, the control unit ends the control process in step ST5.

On the other hand, when the display 200-2 is capable of handling moving image data at the high frame rate in step ST3, the control unit decodes the basic stream STb and the extended stream in step ST6. In this case, when moving image data at 240 HZ can be handled, both the first extended stream STe1 and the second extended stream STe2 are decoded as the extended streams. When moving image data at 120 Hz can be handled, only the first extended stream STe1 is decoded as the extended stream.

In subsequent step ST7, the control unit determines whether or not the display 200-2 has a function of the inverse blending process (blending cancellation process). When the control unit does not have the function of the inverse blending process, the control unit in step ST8 determines to perform the inverse blending process on the set top box 200-1 side, and transmits the blending-cancelled moving image data at 240 Hz or 120 Hz to the set top box 200-1. After the processing in step ST8, the control unit ends the control process in step ST5.

In addition, in a case where the display 200-2 has the function of the inverse blending process in step ST7, the control unit in step ST9 determines to perform the inverse blending process on the display 200-2 side, and transmits blended moving image data at 240 Hz or 120 Hz, and information indicating blending rates of respective pictures and information indicating blending target pictures to the display 200-2 via the HDMI transmission path. After the processing in step ST9, the control unit ends the control process in step ST5.

FIG. 22 depicts an example of a processing outline performed by the transmission device 100, the set top box 200-1, and the display 200-2. Note that an image sequence Q output from the preprocessor 102 of the transmission device 100 and an image sequence Q output from the decoder 204 of the set top box 200-1 are identical to each other in terms of time series. However, the respective image sequences Q pass through a codec, and therefore form images having image qualities different from each other in some cases. The transmission device 100 is similar to the transmission device 100 described with reference to FIG. 15. Accordingly, the same description is not repeated herein.

In a case where a display 200-2A capable of handling moving image data at 240 Hz is connected, the set top box 200-1 decodes the three streams STb, STe1, and STe2 using the decoder 204 to obtain the blended moving image data Q at 240 Hz constituted by the image data Qb, Qe1, and Qe2.

In addition, in a case where the display 200-2A has a function of the inverse blending process (blending cancellation process), the set top box 200-1 transmits the moving image data Q, and information indicating blending rates of respective pictures and information indicating blending target pictures to the display 200-2A via the HDMI transmission path. The example depicted in the figure is a case where the display 200-2A includes the postprocessor 205, and has the function of the inverse blending process (blending cancellation process). Moreover, FIG. 23(a) depicts a state in this case.

In addition, in a case where the display 200-2A does not have the function of the inverse blending process (blending cancellation process), the set top box 200-1 performs the inverse blending process (blending cancellation process) for the moving image data Q using the postprocessor 205 included in the set top box 200-1 to obtain blending-cancelled moving image data at 240 Hz. Thereafter, the set top box 200-1 transmits the blending-cancelled moving image data at 240 Hz to the display 200-2A via the HDMI transmission path. FIG. 23(b) depicts a state in this case.

On the other hand, in a case where a display 200-2B capable of handling moving image data at 120 Hz is connected, the set top box 200-1 decodes the two streams STb and STe1 using the decoder 204 to obtain blended moving image data at 120 Hz constituted by the image data Qb and Qe1.

In addition, in a case where the display 200-2B has the function of the inverse blending process (blending cancellation process), the set top box 200-1 transmits blended moving image data at 120 Hz, and information indicating blending rates of respective pictures and information indicating blending target pictures to the display 200-2B via the HDMI transmission path. The example depicted in the figure is a case where the display 200-2B includes the postprocessor 205, and has the function of the inverse blending process (blending cancellation process) (see FIG. 23(a)).

In addition, in a case where the display 200-2B does not have the function of the inverse blending process (blending cancellation process), the set top box 200-1 performs the inverse blending process (blending cancellation process) for blended moving image data at 120 Hz using the postprocessor 205 included in the set top box 200-1 to obtain blending-cancelled moving image data at 120 Hz. Thereafter, the set top box 200-1 transmits the blending-cancelled moving image data at 120 Hz to the display 200-2B via the HDMI transmission path (see FIG. 23(b)).

Meanwhile, in a case where a display 200-2C capable of handling moving image data at 60 Hz is connected, the set top box 200-1 decodes the stream STb using the decoder 204 to obtain moving image data at 60 Hz constituted by the image data Qb. Thereafter, the set top box 200-1 transmits the obtained moving image data at 60 Hz to the display 200-2C via the HDMI transmission path.

As described above, the set top box 200-1 transmits blended moving image data, and information indicating blending rates of respective pictures and information indicating blending target pictures to the displays 200-2A and 200-2B each capable of handling moving image data at a high frame rate (240 Hz or 120 Hz) and having the function of the inverse blending process (blending cancellation process) via the HDMI transmission path.

In this case, the set top box 200-1 transmits the information indicating the blending rates of the respective pictures and the information indicating the blending target pictures while inserting the respective information into blanking periods of the image data indicating the respective pictures, for example. A blending type info-frame (blending_type InfoFrame) newly defined is used herein.

FIG. 24 depicts a structure example (Syntax) of the blending type info-frame in a case where information indicating a blending target picture includes a picture ID. This figure corresponds to the structure example (Syntax) of the blend target information SEI message in FIG. 8 described above. Accordingly, details of the respective pieces of information will not be repeatedly described. Initial three bytes of this info-frame corresponds to a header portion where information indicating an info-frame type, a version number, and a byte length of a data byte are disposed.

Eight-bit information corresponding to "picture_id" is disposed in data byte 1 (Data Byte 1). One-bit information corresponding to "blending_flag" is disposed in a seventh bit of data byte 2 (Data Byte 2). One-bit information corresponding to "blend_tree_phase" is disposed in a seventh bit of data byte 3 (Data Byte 3). Four-bit information corresponding to "number_of_nodes" is disposed from a third bit to a 0th bit of data byte 3 (Data Byte 3).

Eight-bit information corresponding to "blending_coefficient" is disposed in data byte 4 (Data Byte 4). Eight-bit information corresponding to "target_picture_id" is disposed in data byte 5 (Data Byte 5). The data bytes 4 to 5 are repeated by the number of nodes indicated by "number_of_nodes." Moreover, in a case of an overlap of Blend_tree, the data bytes 3 to 5 are repeated. Furthermore, in a case where the value of "target_picture_id" is the escape code "0×F*," the data bytes 4 to 5 are successively supplied by a value indicated by low-order four bits.

FIG. 25 depicts a structure example (Syntax) of the blending type info-frame in a case where the information indicating the blending target pictures is information indicating a time position relationship between pictures, and corresponds to the structure example (Syntax) of the blend target information SEI message in FIG. 12 described above. Accordingly, details of the respective pieces of information will not be repeatedly described. Initial three bytes of this info-frame corresponds to a header portion where information indicating an info-frame type, a version number, and a byte length of a data byte are disposed.

Eight-bit information corresponding to "Dlayer_id" is disposed in data byte 1 (Data Byte 1). One-bit information corresponding to "blending_flag" is disposed in a seventh bit of data byte 2 (Data Byte 2). One-bit information corresponding to "blend_tree_phase" is disposed in a seventh bit of data byte 3 (Data Byte 3). Four-bit information corresponding to "number_of_nodes" is disposed from a third bit to a 0th bit of data byte 3 (Data Byte 3).

Eight-bit information corresponding to "blending_coefficient" is disposed in data byte 4 (Data Byte 4). Eight-bit information corresponding to "target_Dlayer_id" is disposed in data byte 5 (Data Byte 5). Eight-bit information corresponding to "direction_type" is disposed in data byte 6 (Data Byte 6). The data bytes 4 to 6 are repeated by the number of nodes indicated by "number_of_nodes." Moreover, in a case of an overlap of Blend_tree, the data bytes 3 to 6 are repeated. Furthermore, in a case where the value of "direction_type" is the escape code "0×F*," the data bytes 4 to 6 are successively supplied by a value indicated by low-order four bits.

FIG. 26 depicts a configuration example of the set top box 200-1. In FIG. 26, parts corresponding to parts in FIG. 18 are given identical reference numbers, and detailed description of these parts is not repeated where appropriate. The set top box 200-1 includes a control unit 201-1, the reception unit 202, the demultiplexer 203, the decoder 204, the postprocessor 205, and the HDMI transmission unit 208.

The control unit 201-1 controls operations of respective units of the set top box 200-1. The reception unit 202 demodulates an RF modulation signal received via the reception antenna to obtain the transport stream TS. The demultiplexer 203 extracts the basic stream STb and also extended streams from the transport stream TS by filtering a PID, and supplies the extracted streams to the decoder 204.

In this case, the basic stream STb, the first extended stream STe1, and the second extended stream STe2 are extracted in a case where the display 200-2 is capable of handling moving image data at 240 Hz. Moreover, the basic stream STb and the first extended stream STe1 are extracted in a case where the display 200-2 is capable of handling moving image data at 120 Hz. Furthermore, only the basic stream STb is extracted in a case where the display 200-2 is capable of handling moving image data at 60 Hz.

The decoder 204 performs a decoding process for the respective streams extracted by the demultiplexer 203 to obtain moving image data. In a case where the display 200-2 is capable of handling moving image data at 240 Hz, moving image data at 240 Hz constituted by the image data Qb indicating respective pictures of the basic stream at 60 Hz, the image data Qe1 indicating respective pictures of the first extended stream at +60 Hz, and the image data Qe2 indicating respective pictures of the second extended stream at +120 Hz is obtained. Moreover, in a case where the display 200-2 is capable of handling moving image data at 120 Hz, moving image data at 120 Hz constituted by the image data Qb indicating respective pictures of the basic stream at 60 Hz, and the image data Qe1 indicating respective pictures of the first extended stream at +60 Hz is obtained. Furthermore, in a case where the display 200-2 is capable of handling moving image data at 60 Hz, moving image data at 60 Hz constituted by the image data Qb indicating respective pictures of the basic stream at 60 Hz is obtained.

In a case where the display 200-2 is capable of handling moving image data at 240 Hz and does not have the function of the inverse blending process, the postprocessor 205 performs the inverse blending process (blending cancellation process) for the moving image data at 240 Hz obtained by the decoder 204 to obtain blending-cancelled moving image data at 240 Hz. Moreover, in a case where the display 200-2 is capable of handling moving image data at 120 Hz and does not have the function of the inverse blending process, the postprocessor 205 performs the inverse blending process (blending cancellation process) for the moving image data at 120 Hz obtained by the decoder 204 to obtain blending-cancelled moving image data at 120 Hz.

The HDMI transmission unit 208 transmits moving image data not compressed to the display 200-2 via the HDMI transmission path using communication in conformity with HDMI. In a case where the display 200-2 is capable of handling at 240 Hz and does not have the function of the inverse blending process herein, the blending-cancelled moving image data at 240 Hz obtained by the postprocessor 205 is transmitted to the display 200-2 via the HDMI transmission path.

Moreover, in a case where the display 200-2 is capable of handling moving image data at 240 Hz and has the function of the inverse blending process, the moving image data at 240 Hz obtained by the decoder 204 is transmitted to the display 200-2 via the HDMI transmission path. In this case, the inverse blending process is performed on the display 200-2 side. Accordingly, the blending type info-frame including the information indicating the blending rates of the respective pictures and the information indicating the blending target pictures (see FIGS. 24 and 25) is transmitted while inserted into blanking periods of the image data indicating the respective pictures constituting the moving image data.

Moreover, in a case where the display 200-2 is capable of handling moving image data at 120 Hz and does not have the function of the inverse blending process, the blending-cancelled moving image data at 120 Hz obtained by the postprocessor 205 is transmitted to the display 200-2 via the HDMI transmission path.

Furthermore, in a case where the display 200-2 is capable of handling moving image data at 120 Hz and has the function of the inverse blending process, the moving image data at 120 Hz obtained by the decoder 204 is transmitted to the display 200-2 via the HDMI transmission path. In this case, the inverse blending process is performed on the display 200-2 side. Accordingly, the blending type info-frame including the information indicating the blending rates of the respective pictures and the information indicating the blending target pictures (see FIGS. 24 and 25) is transmitted while inserted into blanking periods of the image data indicating the respective pictures constituting the moving image data.

In addition, in a case where the display 200-2 is capable of handling moving image data at 60 Hz, moving image data at 60 Hz constituted by the image data Qb indicating respective pictures of the basic stream obtained by the decoder 204 is transmitted to the display 200-2 via the HDMI transmission path.

FIG. 27 depicts a configuration example of the display 200-2A handling moving image data at 240 Hz. Parts in FIG. 27 are given identical reference numbers of corresponding parts in FIG. 18, and detailed description of these parts is not repeated where appropriate. The display 200-2A includes a control unit 201-2, an HDMI reception unit 209, the postprocessor 205, the MCFI unit 206, and the panel display unit 207. Note that the postprocessor 205 is not provided in some cases.

The control unit 201-2 controls operations of respective units of the display 200-2A. The HDMI reception unit 209 receives moving image data at 240 Hz not compressed from the set top box 200-1 via the HDMI transmission path using communication in conformity with HDMI. In a case where the postprocessor 205 is absent herein, blending-cancelled moving image data at 240 Hz is received.

On the other hand, in a case where the postprocessor 205 is present, the HDMI reception unit 209 receives blended moving image data at 240 Hz. In this case, the blending type info-frame (see FIGS. 24 and 25) inserted into the blanking periods of the moving image data is extracted, and transmitted to the control unit 201-2. In this manner, the control unit 201-2 can recognize which of the image data indicating the peripheral pictures is blended with the image data indicating the pictures of the blended images and what blending rates of these image data are applied. Accordingly, the inverse blending process (blending cancellation process) performed by the postprocessor 205 is appropriately and easily controllable.

The postprocessor 205 performs the inverse blending process (blending cancellation process) for the blended moving image data at 240 Hz received by the HDMI reception unit 209 under control by the control unit 201-2 to obtain blending-cancelled moving image data at 240 Hz.

The MCFI unit 206 performs frame interpolation of motion compensation for the moving image data at 240 Hz received by the HDMI reception unit 209 or the blending-cancelled moving image data at 240 Hz obtained by the postprocessor 205 to obtain moving image data at a higher frame rate. Note that the MCFI unit 206 is not be provided in some cases. The panel display unit 207 displays images corresponding to the moving image data at 240 Hz or the moving image data at a higher frame rate obtained by the MCFI unit 206.

A configuration of the display 200-2B having a decoding capability for processing moving image data at 120 Hz is similar to the configuration of the display 200-2A of FIG. 27. In a case of the display 200-2B, the HDMI reception unit 209 receives moving image data at 120 Hz not compressed from the set top box 200-1 via the HDMI transmission path using communication in conformity with HDMI. In a case where the postprocessor 205 is absent herein, the blending-cancelled moving image data at 120 Hz is received.

On the other hand, in a case where the postprocessor 205 is present, the HDMI reception unit 209 receives blended moving image data at 120 Hz. In this case, the blending type info-frame (see FIGS. 24 and 25) inserted into the blanking periods of the moving image data is extracted, and transmitted to the control unit 201-2. In this manner, the control unit 201-2 can recognize which of the image data indicating the peripheral pictures is blended with the image data indicating the pictures of the blended images and what blending rates of these image data are applied. Accordingly, the inverse blending process (blending cancellation process) performed by the postprocessor 205 is appropriately and easily controllable.

Moreover, in the case of the display 200-2B, the postprocessor 205 performs the inverse blending process (blending cancellation process) for the blended moving image data at 120 Hz received by the HDMI reception unit 209 under control by the control unit 201-2 to obtain blending-cancelled moving image data at 120 Hz.

Furthermore, in the case of the display 200-2B, the MCFI unit 206 performs frame interpolation of motion compensation for the moving image data at 120 Hz received by the HDMI reception unit 209 or the blending-cancelled moving image data at 120 Hz obtained by the postprocessor 205 to obtain moving image data at a higher frame rate. Note that the MCFI unit 206 is not provided in some cases. The panel display unit 207 displays images corresponding to the moving image data at 120 Hz or the moving image data at a higher frame rate obtained by the MCFI unit 206.

FIG. 28 depicts a configuration example of the 200-2C handling moving image data at 60 Hz. Parts in FIG. 28 are given identical reference numbers of corresponding parts in FIG. 18, and detailed description of these parts is not repeated where appropriate. The display 200-2C includes the control unit 201-2, the HDMI reception unit 209, the MCFI unit 206, and the panel display unit 207.

The control unit 201-2 controls operations of respective units of the display 200-2C. The HDMI reception unit 209 receives moving image data at 60 Hz not compressed from the set top box 200-1 via the HDMI transmission path using communication in conformity with HDMI.

The MCFI unit 206 performs frame interpolation of motion compensation for the moving image data at a normal frame rate received by the HDMI reception unit 209 to obtain moving image data at a higher frame rate. Note that the MCFI unit 206 is not provided in some cases. The panel display unit 207 displays images corresponding to the moving image data at 60 Hz received by the HDMI reception unit 209 or the moving image data at a higher frame rate obtained by the MCFI unit 206.

According to the transmission and reception system 10A depicted in FIG. 20, therefore, in a case where blended moving image data at a high frame rate is transmitted from the set top box 200-1 to the display 200-2 using HDMI, information indicating blending rates and information indicating blending target pictures are simultaneously transmitted. Accordingly, the display 200-2 can appropriately and easily perform the inverse blending process on the basis of the information indicating the blending rates and the information indicating the blending target pictures, and therefore can obtain moving image data at a high frame rate in a preferable manner.

<3. Modified Examples>

In addition, according to the embodiments described above by way of example, the high frame rate is 120 Hz or 240 Hz, and the normal frame rate is 60 Hz. However, combinations of the frame rate are not limited to these examples. For example, a combination of 100 Hz or 200 Hz and 50 Hz is also adoptable.

Moreover, while the transmission and reception system 10 constituted by the transmission device 100 and the TV receiver 200, and the transmission and reception system 10A constituted by the transmission device 100, the set top box 200-1, and the display 200-2 have been described in the above embodiments, the configuration of the transmission and reception system to which the present technology is applicable is not limited to these examples.

Furthermore, in the above embodiments, an example is described that the container is a transport stream (MPEG-2 TS). However, the present technology is similarly applicable to a system configured to achieve distribution to a receiving terminal using a network such as the Internet. Distribution of the Internet is often performed using a container of MP4 or other types of format. More specifically, the container may be any one of containers of various types of format, such as a transport stream (MPEG-2 TS) or MMT (MPEG Media Transport) adopted in digital broadcast standards, and ISOBMFF (MP4) used in the Internet distribution.

In addition, the present technology may have following configurations.

(1) A transmission device including:

a processing unit that performs a process for blending image data indicating respective pictures of first moving image data at a first frame rate with image data indicating peripheral pictures at blending rates independent for each picture to obtain second moving image data at the first frame rate, in which

at least image data indicating pictures corresponding to a second frame rate lower than the first frame rate in image data indicating respective pictures constituting the second moving image data is in a blended state with the image data indicating peripheral pictures; and

the transmission device further includes

an encoding unit that obtains a basic stream by encoding the image data indicating the pictures corresponding to the second frame rate, and also obtains a predetermined number of extended streams by encoding image data indicating the remaining pictures,

an insertion unit that inserts information indicating blending rates and information indicating blending target pictures into encoded image data of the basic stream and the predetermined number of extended streams, and

a transmission unit that transmits a container including the basic stream and the predetermined number of extended streams into which the information indicating the blending rates and the blending target pictures are inserted.

(2) The transmission device according to (1) described above, in which
the information indicating the blending target pictures is picture identification information individually given to a corresponding picture.

(3) The transmission device according to (1) described above, in which
the information indicating the blending target pictures is information indicating a time position relationship between pictures.

(4) The transmission device according to any one of (1) to (3) described above, in which
the encoding unit encodes the basic stream into a lowermost layer, and encodes the predetermined number of extended streams into layers higher than the lowermost layer.

(5) The transmission device according to (4) described above, in which
the insertion unit further inserts type information that indicates the number of layers for the layer encoding and a direction of blending into a layer of the container including the basic stream and the predetermined number of extended streams.

(6) A transmission method including:

a processing step where a processing unit performs a process for blending image data indicating respective pictures of first moving image data at a first frame rate with image data indicating peripheral pictures at blending rates independent for each picture to obtain second moving image data at the first frame rate, in which

at least image data indicating pictures corresponding to a second frame rate lower than the first frame rate in image data indicating respective pictures constituting the second moving image data is in a blended state with image data indicating peripheral pictures; and

the transmission method further includes

an encoding step where an encoding unit obtains a basic stream by encoding the image data indicating the pictures corresponding to the second frame rate, and also obtains a predetermined number of extended streams by encoded image data indicating the remaining pictures,

an insertion step where an insertion unit inserts information indicating blending rates and information indicating blending target pictures into encoded image data of the basic stream and the predetermined number of extended streams, and

a transmission step where a transmission unit transmits a container that includes the basic stream and the predetermined number of extended streams into which the information indicating the blending rates and the blending target pictures are inserted.

(7) A reception device including:

a reception unit that receives a container including a basic stream and a predetermined number of extended streams, in which

the basic stream is obtained by encoding image data that is included in second moving image data at a first frame rate obtained by performing a process for blending image data indicating respective pictures of first moving image data at the first frame rate with image data indicating peripheral pictures at blending rates independent for each picture, and indicates pictures corresponding to a second frame rate lower than the first frame rate in a blended state with at least the image data indicating the peripheral pictures, the predetermined number of extended streams being obtained by encoding image data indicating the remaining pictures,

information indicating blending rates and information indicating blending target pictures are inserted into encoded image data of the basic stream and the predetermined number of extended streams, and

the reception device further includes a processing unit that obtains, in accordance with a display ability, moving image data at the second frame rate by decoding the basic stream, or moving image data at a frame rate equal to or lower than the first frame rate and higher than the second frame rate by decoding the basic stream and a part or all of the predetermined number of extended streams and performing an inverse blending process on a basis of the information indicating the blending rates and the information indicating the blending target pictures.

(8) A reception method including:

a reception step where a reception unit receives a container including a basic stream and a predetermined number of extended streams, in which

the basic stream is obtained by encoding image data that is included in second moving image data at a first frame rate obtained by performing a process for blending image data indicating respective pictures of first moving image data at the first frame rate with image data indicating peripheral pictures at blending rates independent for each picture, and indicates pictures corresponding to a second frame rate lower than the first frame rate in a blended state with at least the image data indicating the peripheral pictures, the predetermined number of extended streams being obtained by encoding image data indicating remaining pictures;

information indicating blending rates and information indicating blending target pictures are inserted into encoded image data of the basic stream and the predetermined number of extended streams, and

the reception method further includes a processing step where a processing unit obtains, in accordance with a display ability, moving image data at the second frame rate by decoding the basic stream, or moving image data at a frame rate equal to or lower than the first frame rate and higher than the second frame rate by decoding the basic stream and a part or all of the predetermined number of extended streams and performing an inverse blending process on a basis of information indicating the blending rates and information indicating blending target pictures.

(9) A transmission device including:

an acquisition unit that acquires second moving image data obtained by performing a process for blending image data indicating respective pictures of first moving image data with image data indicating peripheral pictures at blending rates independent for each picture; and

a transmission unit that transmits the second moving image data, information indicating blending rates of respective pictures, and information indicating blending target pictures to an external device via a transmission path.

(10) The transmission device according to (9) described above, in which
the transmission unit transmits the information indicating the blending rates of the respective pictures and the information indicating the blending target pictures while inserting the information indicating the blending rates and the blending target pictures into blanking periods of the image data indicating the respective pictures of the second moving image data.
(11) The transmission device according to (9) or (10), further including:

a processing unit that performs an inverse blending process for image data indicating respective pictures of the second moving image data on a basis of information indicating the blending rates and information indicating the blending target pictures to obtain third moving image data, in which
the transmission unit transmits the third moving image data instead of the second moving image data when the external device does not have a function of the inverse blending process.

(12) A transmission method including:

an acquisition step where an acquisition unit acquires second moving image data obtained by performing a process for blending image data indicating respective pictures of first moving image data with image data indicating peripheral pictures at blending rates independent for each picture; and
a transmission unit where a transmission unit transmits the second moving image data, information indicating blending rates of respective pictures, and information indicating blending target pictures to an external device via a transmission path.

(13) A reception device including:

a reception unit that receives, from an external device via a transmission path, second moving image data obtained by performing a process for blending image data indicating respective pictures of first moving image data with image data indicating peripheral pictures at blending rates independent for each picture, information indicating blending rates of respective pictures, and information indicating blending target pictures; and
a processing unit that obtains third moving image data blending-cancelled by performing an inverse blending process for image data indicating respective pictures of the second moving image data on a basis of the information indicating the blending rates and the information indicating the blending target pictures.

(14) A reception method including:

a reception step where a reception unit receives, from an external device via a transmission path, second moving image data obtained by performing a process for blending image data indicating respective pictures of first moving image data with image data indicating peripheral pictures at blending rates independent for each picture, information indicating blending rates of respective pictures, and information indicating blending target pictures; and
a processing unit where a processing unit obtains third moving image data blending-cancelled by performing an inverse blending process for image data indicating respective pictures of the second moving image data on a basis of the information indicating the blending rates and the information indicating the blending target pictures.

A main characteristic of the present technology is to insert information indicating blending rates and information indicating blending target pictures into encoded image data associated with pictures of blended images constituted by a basic stream and extended streams. In this manner, moving image display at a high frame rate can be achieved on a receiving side in a preferable manner by performing appropriately and easily an inverse blending process on the basis of the information indicating the blending rates and the information indicating the blending target pictures (FIGS. 8, 12, and 17). A further main characteristic of the present technology is to transmit information indicating blending rates and information indicating blending target pictures in correspondence with image data associated with pictures of blended images in a case of transmission of blended moving image data at a high frame rate by a digital interface. In this manner, moving image display at the high frame rate can be achieved on a receiving side in a preferable manner by appropriately and easily performing an inverse blending process on the basis of the information indicating the blending rates and the information indicating the blending target pictures (see FIGS. 20 and 23).

[Reference Signs List]

| 10, 10A | Transmission and reception system |
| 100 | Transmission device |
| 101 | Control unit |
| 102 | Preprocessor |
| 103 | Encoder |
| 104 | Multiplexer |

| 105 | Transmission unit |
| 200, 200A, 200B, 200C | TV receiver |
| 200-1 | Set top box |
| 200-2, 200-2A, 200-2B, 200-2C | Display |
| 201, 201-1, 201-2 | Control unit |
| 202 | Reception unit |
| 203 | Demultiplexer |
| 204 | Decoder |
| 205 | Postprocessor |
| 206 | MCFI unit |
| 207 | Panel display unit |
| 208 | HDMI transmission unit |
| 209 | HDMI reception unit |

**Claims**

1. A transmission device comprising:

a processing unit that performs a process for blending image data indicating respective pictures of first moving image data at a first frame rate with image data indicating peripheral pictures at blending rates independent for each picture to obtain second moving image data at the first frame rate, wherein at least image data indicating pictures corresponding to a second frame rate lower than the first frame rate in image data indicating respective pictures constituting the second moving image data is in a blended state with the image data indicating peripheral pictures, and the transmission device further includes

an encoding unit that obtains a basic stream by encoding the image data indicating the pictures corresponding to the second frame rate, and also obtains a predetermined number of extended streams by encoding image data indicating remaining pictures, an insertion unit that inserts information indicating blending rates and information indicating blending target pictures into encoded image data of the basic stream and the predetermined number of extended streams, and a transmission unit that transmits a container including the basic stream and the predetermined number of extended streams into which the information indicating the blending rates and the blending target pictures are inserted.

2. The transmission device according to claim 1, wherein the information indicating the blending target pictures includes picture identification information individually given to a corresponding picture.

3. The transmission device according to claim 1, wherein the information indicating the blending target pictures includes information indicating a time position relationship between pictures.

4. The transmission device according to claim 1, wherein the encoding unit encodes the basic stream into a lowermost layer, and encodes the predetermined number of extended streams into layers higher than the lowermost layer.

5. The transmission device according to claim 4, wherein the insertion unit further inserts type information that indicates the number of layers for the layer encoding and a direction of blending into a layer of the container including the basic stream and the predetermined number of extended streams.

6. A transmission method comprising:

a processing step where a processing unit performs a process for blending image data indicating respective pictures of first moving image data at a first frame rate with image data indicating peripheral pictures at blending rates independent for each picture to obtain second moving image data at the first frame rate, wherein at least image data indicating pictures corresponding to a second frame rate lower than the first frame rate in image data indicating respective pictures constituting the second moving image data is in a blended state with image data indicating peripheral pictures, and the transmission method further includes

an encoding step where an encoding unit obtains a basic stream by encoding the image data indicating the pictures corresponding to the second frame rate, and also obtains a predetermined number of extended streams by encoded image data indicating remaining pictures,

an insertion step where an insertion unit inserts information indicating blending rates and information indicating blending target pictures into encoded image data of the basic stream and the predetermined number of extended streams, and

a transmission step where a transmission unit transmits a container that includes the basic stream and the predetermined number of extended streams into which the information indicating the blending rates and the blending target pictures are inserted.

7. A reception device comprising:

a reception unit that receives a container including a basic stream and a predetermined number of extended streams, wherein

the basic stream is obtained by encoding image data that is included in second moving image data at a first frame rate obtained by performing a process for blending image data indicating respective pictures of first moving image data at the first frame rate with image data indicating peripheral pictures at blending rates independent for each picture, and indicates pictures corresponding to a second frame rate lower than the first frame rate in a blended state with at least the image data indicating the peripheral pictures, the predetermined number of extended streams being obtained by encoding image data indicating remaining pictures,

information indicating blending rates and information indicating blending target pictures are inserted into encoded image data of the basic stream and the predetermined number of extended streams, and

the reception device further includes a processing unit that obtains, in accordance with a display ability, moving image data at the second frame rate by decoding the basic stream, or moving image data at a frame rate equal to or lower than the first frame rate and higher than the second frame rate by decoding the basic stream and a part or all of the predetermined number of extended streams and performing an inverse blending process on a basis of the information indicating the blending rates and the information indicating the blending target pictures.

8. A reception method comprising:

a reception step where a reception unit receives a container including a basic stream and a predetermined number of extended streams, wherein

the basic stream is obtained by encoding image data that is included in second moving image data at a first frame rate obtained by performing a process for blending image data indicating respective pictures of first moving image data at the first frame rate with image data indicating peripheral pictures at blending rates independent for each picture, and indicates pictures corresponding to a second frame rate lower than the first frame rate in a blended state with at least the image data indicating the peripheral pictures, the predetermined number of extended streams being obtained by encoding image data indicating remaining pictures,

information indicating blending rates and information indicating blending target pictures are inserted into encoded image data of the basic stream and the predetermined number of extended streams, and

the reception method further includes a processing step where a processing unit obtains, in accordance with a display ability, moving image data at the second frame rate by decoding the basic stream, or moving image data at a frame rate equal to or lower than the first frame rate and higher than the second frame rate by decoding the basic stream and a part or all of the predetermined number of extended streams and performing an inverse blending process on a basis of information indicating the blending rates and information indicating blending target pictures.

9. A transmission device comprising:

an acquisition unit that acquires second moving image data obtained by performing a process for blending image data indicating respective pictures of first moving image data with image data indicating peripheral pictures at blending rates independent for each picture; and

a transmission unit that transmits the second moving image data, information indicating blending rates of respective pictures, and information indicating blending target pictures to an external device via a transmission path.

10. The transmission device according to claim 9, wherein
the transmission unit transmits the information indicating the blending rates of the respective pictures and the information indicating the blending target pictures while inserting the information indicating the blending rates and the blending target pictures into blanking periods of the image data indicating the respective pictures of the second moving image data.

11. The transmission device according to claim 9, further comprising:

a processing unit that performs an inverse blending process for image data indicating respective pictures of the second moving image data on a basis of information indicating the blending rates and information indicating the blending target pictures to obtain third moving image data, wherein
the transmission unit transmits the third moving image data instead of the second moving image data when the external device does not have a function of the inverse blending process.

12. A transmission method comprising:

an acquisition step where an acquisition unit acquires second moving image data obtained by performing a process for blending image data indicating respective pictures of first moving image data with image data indicating peripheral pictures at blending rates independent for each picture; and
a transmission unit where a transmission unit transmits the second moving image data, information indicating blending rates of respective pictures, and information indicating blending target pictures to an external device via a transmission path.

13. A reception device comprising:

a reception unit that receives, from an external device via a transmission path, second moving image data obtained by performing a process for blending image data indicating respective pictures of first moving image data with image data indicating peripheral pictures at blending rates independent for each picture, information indicating blending rates of respective pictures, and information indicating blending target pictures; and
a processing unit that obtains third moving image data blending-cancelled by performing an inverse blending process for image data indicating respective pictures of the second moving image data on a basis of the information indicating the blending rates and the information indicating the blending target pictures.

14. A reception method comprising:

a reception step where a reception unit receives, from an external device via a transmission path, second moving image data obtained by performing a process for blending image data indicating respective pictures of first moving image data with image data indicating peripheral pictures at blending rates independent for each picture, information indicating blending rates of respective pictures, and information indicating blending target pictures; and
a processing unit where a processing unit obtains third moving image data blending-cancelled by performing an inverse blending process for image data indicating respective pictures of the second moving image data on a basis of the information indicating the blending rates and the information indicating the blending target pictures.

# FIG.1

# FIG.2

(a)

EXTENDED STREAM (Dlayer0)
(+60Hz)

BASIC STREAM (Dlayer1)
(60Hz)

○  NON-BLENDED IMAGE

◉  BLENDED IMAGE

(b)

EXTENDED STREAM (Dlayer0)
(+60Hz)

BASIC STREAM (Dlayer1)
(60Hz)

(c)

EXTENDED STREAM (Dlayer0)
(+60Hz)

BASIC STREAM (Dlayer1)
(60Hz)

Program SWITCHING POINT

Time

EP 3 706 422 A1

# FIG.3

(a)

SECOND EXTENDED STERAM (Dlayer0)
    (+120Hz)

FIRST EXTENDED STREAM (Dlayer1)
    (+60Hz)

BASIC STREAM (Dlayer2)
    (60Hz)

(b)

SECOND EXTENDED STERAM (Dlayer0)
    (+120Hz)

FIRST EXTENDED STREAM (Dlayer1)
    (+60Hz)

BASIC STREAM (Dlayer2)
    (60Hz)

○ NON-BLENDED IMAGE

◉ BLENDED IMAGE

Time

# F I G . 4

● BLENDED IMAGE  ○ NON-BLENDED IMAGE  ⊙ NON-TRANSMITTED IMAGE

Time →

SECOND EXTENDED STERAM (Dlayer0) (+120Hz)

FIRST EXTENDED STREAM (Dlayer1) (+60Hz)

BASIC STREAM (Dlayer2) (60Hz)

P0_01  P0_02  P0_03  P0_04  P0_05  P0_06  P0_07  P0_08  P0_09  P0_10  P0_11

a  b  c  d  e  f  g  h  i  m  x  q  r  s  w

P1_02  P1_04  P1_06  P1_08  P1_10

j  k  l  t  u  v

P2_04  P2_08

Tree_phase0     Tree_phase1     Tree_phase0

Picture ARRANGEMENT: DISPLAY ORDER

# FIG.5

| | | near | | far | |
|---|---|---|---|---|---|
| Picture | TreePH | COEFFICIENT | Node(Pic_ID) | COEFFICIENT | Node(Pic_ID) |
| P1_02 | 0 | a | P0_01 | | |
| | | b | ESC2(0xF0) | | |
| | | c | P0_03 | | |
| P2_04 | 0 | j | P1_02 | | |
| | | k | ESC1(0xF3) | d | P0_03 |
| | | | | e | ESC2(0xF0) |
| | | | | f | P0_05 |
| | | l | P1_06 | | |
| P1_06 | 0 | g0 | P0_05 | | |
| | | h0 | ESC2(0xF0) | | |
| | | i0 | P0_07 | | |
| | 1 | g1 | P0_05 | | |
| | | h1 | ESC2(0xF0) | | |
| | | i1 | P0_07 | | |
| P2_08 | 1 | t | P1_06 | | |
| | | u | ESC1(0xF3) | m | P0_07 |
| | | | | X | ESC2(0xF0) |
| | | | | w | P0_09 |
| | | v | P1_10 | | |

EP 3 706 422 A1

# FIG.6

⊙ BLENDED  ○ NON-BLENDED  ◌ NON-TRANSMITTED
IMAGE           IMAGE              IMAGE

*time*

SECOND EXTENDED
STERAM (Dlayer0)
(+120Hz)

FIRST EXTENDED
STREAM (Dlayer1)
(+60Hz)

BASIC STREAM (Dlayer2)
(60Hz)

P0_00    P0_01    P0_02    P0_03

c    d         e    f

P1_00          P1_02

a         b

P2_00

Tree_phase0

P0_04    P0_05    P0_06    P0_07

P1_04          P1_06

P2_04

Tree_phase0

EP 3 706 422 A1

# FIG.7

⦿ BLENDED IMAGE    ◯ NON-BLENDED IMAGE    ⊙ NON-TRANSMITTED IMAGE

*time* →

SECOND EXTENDED STERAM (Dlayer0) (+120Hz)

FIRST EXTENDED STREAM (Dlayer1) (+60Hz)

BASIC STREAM (Dlayer2) (60Hz)

P0_00    P0_01    P0_02    P0_03

c    d    e    f

P1_00        P1_02

a    b

P2_00

Tree_phase0

P0_04    P0_05    P0_06    P0_07

P1_04        P1_06

P2_04

Tree_phase0

EP 3 706 422 A1

# FIG.8

blend_target_information SEI SYNTAX

| Syntax | No. of Bits | Format |
|---|---|---|
| blend_target_information ( ) { | | |
|   blend_target_information_id | | uimsbf |
|   blend_target_information_length | 8 | uimsbf |
|   picture_id | 8 | uimsbf |
|   blending_flag | 1 | bslbf |
|   reseved | 7 | bslbf |
|   while (procssed_length < blend_target_information_length) { | | |
|     blend_tree_phase | 1 | bslbf |
|     reserved | 3 | bslbf |
|     number_of_nodes | 4 | uimsbf |
|     for ( j = 0 ; j < number_of_nodes ; j++ ) { | | |
|       blending_coefficient | 8 | uimsbf |
|       target_picture_id | 8 | uimsbf |
|       if ( (target_picture_id >> 4) == 0xF ) { | | |
|         for ( k = 0 ; k < (target_picture_id & 0xF ) ; k++ ){ | | |
|           blending_coefficient | 8 | uimsbf |
|           target_picture_id | 8 | uimsbf |
|         } | | |
|       } | | |
|     } | | |
|  } | | |

EP 3 706 422 A1

# F I G . 9

blend_target_information SEI SEMANTICS

| | |
|---|---|
| picture_id (8bits) | IDENTIFICATION OF CURRENT PICTURE: picture ID VALUE ("0xF*" IS PROHIBITED) |
| blending_flag (1bit) | FLAG INDICATING BLENDED OR NON-BLENDED<br>1: BLENDED, 0: NON-BLENDED |
| blend_tree_phase (1bit) | TOGGLE INFORMATION INDICATING BLENDED tree GROUP |
| number_of_nodes (4bits) | NUMBER OF NODES (NUMBER OF PICTURES INCLUDED IN tree) |
| blending_coefficient (8bits) | COEFFICIENT VALUE INDICATING BLENDING RATE |
| target_picture_id (8bits) | Picture_id of BLENDING TARGET<br>("0xF*" HAS SPECIAL MEANING, INDICATING THAT VALUE IS REFLECTED IN PICTURES OF REFERENCE SOURCE) |

EP 3 706 422 A1

# FIG.10

Picture ARRANGEMENT:
DISPLAY ORDER

EP 3 706 422 A1

# F I G . 1 1

| PICTURE Dlayer VALUE | TreePH | near | | | far | | |
|---|---|---|---|---|---|---|---|
| | | COEFFICIENT | TARGET Dlayer | Direction_type | COEFFICIENT | TARGET Dlayer | Direction_type |
| 1 | 0 | a | 0 | P | | | |
| | | b | 0 | ESC2(0xF0) | | | |
| | | c | 0 | N | | | |
| 2 | 0 | j | 1 | P | | | |
| | | k | 1 | ESC1(0xF3) | d | 0 | P |
| | | | | | e | 0 | ESC2(0xF0) |
| | | | | | f | 0 | N |
| | | l | 1 | N | | | |
| 1 | 0 | g0 | 0 | P | | | |
| | | h0 | 0 | ESC2(0xF0) | | | |
| | | i0 | 0 | N | | | |
| | 1 | g1 | 0 | P | | | |
| | | h1 | 0 | ESC2(0xF0) | | | |
| | | i1 | 0 | N | | | |
| 2 | 1 | t | 1 | P | | | |
| | | u | 1 | ESC1(0xF3) | m | 0 | P |
| | | | | | X | 0 | ESC2(0xF0) |
| | | | | | w | 0 | N |
| | | v | 1 | N | | | |

EP 3 706 422 A1

# F I G . 1 2

blend_target_information SEI SYNTAX

| | No. of Bits | Format |
|---|---|---|
| blend_target_information ( ) { | | |
| blend_target_information_id | | uimsbf |
| blend_target_information_length | 8 | uimsbf |
| Dlayer_id | 8 | uimsbf |
| blending_flag | 1 | bslbf |
| reseved | 7 | bslbf |
| while (procssed_length < blend_target_information_length) { | | |
| blend_tree_phase | 1 | bslbf |
| reserved | 3 | bslbf |
| number_of_nodes | 4 | uimsbf |
| for ( j = 0 ; j < number_of_nodes ; j++ ) { | | |
| blending_coefficient | 8 | uimsbf |
| target_Dlayer_id | 8 | uimsbf |
| direction_type | 8 | uimsbf |
| if ( (direction_type  >> 4 ) == 0xF ) { | | |
| for ( k = 0 ; k < (direction_type & 0xF ) ; k++ ){ | | |
| blending_coefficient | 8 | uimsbf |
| target_Dlayer_id | 8 | uimsbf |
| direction_type | 8 | uimsbf |
| } | | |
| } | | |
| } | | |
| } | | |

# FIG.13

blend_target_information SEI SEMANTICS

| | |
|---|---|
| Dlayer_id (8bits) | Dlayer VALUE TO WHICH CURRENT PICTURE BELONGS |
| blending_flag (1bit) | FLAG INDICATING BLENDED OR NON-BLENDED |
| | 1:BLENDED, 0: NON-BLENDED |
| blend_tree_phase (1bit) | TOGGLE INFORMATION INDICATING BLENDED tree GROUP |
| number_of_nodes (4bits) | NUMBER OF NODES (NUMBER OF PICTURES INCLUDED IN tree) |
| blending_coefficient (8bits) | COEFFICIENT VALUE INDICATING BLENDING RATE |
| drection_type (8bits) | INDICATING RELATIVE POSITION RELATIONSHIP IN TERMS OF TIME |
| | 0x01 Past, 0x02 Current, 0x03 Next |
| | ("0xF*" HAS SPECIAL MEANING, INDICATING THAT VALUE IS REFLECTED IN PICTURES OF REFERENCE SOURCE) |
| target_Dlayer_id (8bits) | Dlayer VALUE OF BLENDING TARGET PICTURE |

EP 3 706 422 A1

# FIG.14

blend_type_descriptor SYNTAX

(a)

| Syntax | No. of Bits | Format |
|---|---|---|
| blend_type_descriptor ( ){ | | |
|    blend_type_descriptor_tag | 8 | uimsbf |
|    blend_type_descriptor_length | 8 | uimsbf |
|    blend_type | 8 | uimsbf |
|    Dlayer | 8 | uimsbf |
| } | | |

(a)

```
blend_type (8bits)   BLEND tree type
                     0x00   2layer BLEND WITH NEXT IMAGE
                     0x01   2layer BLEND WITH PAST IMAGE
                     0x02   2layer BLEND WITH PAST AND NEXT IMAGES
                     0x03   3layer BLEND WITH NEXT IMAGE
                     0x04   3layer BLEND WITH PAST IMAGE
                     0x05   3layer BLEND WITH PAST AND NEXT IMAGES

Dlayer  (8bits)      Dlayer VALUE TO WHICH substream BELONGS
                     0x0    0 (HIGHEST-ORDER LAYER)
                     0x1    1 (SECOND HIGHEST-ORDER LAYER)
                     0x2    2 (THIRD HIGHEST-ORDER LAYER)
```

EP 3 706 422 A1

FIG.15

# F I G . 1 6

100

P → PREPROCESSOR (102) → Q(Qb,Qe1,Qe2) → ENCODER (103) → STb,STe1,STe2 → MULTIPLEXER (104) → TS → TRANSMISSION UNIT (105)

CONTROL UNIT (101)

# FIG.17

# FIG.18

EP 3 706 422 A1

# FIG.19

EP 3 706 422 A1

# FIG.20

10A

100

TRANSMISSION
DEVICE

TS

200-1

STB

HDMI

200-2

Display

# F I G . 2 1

START — ST1

CHECK EDID OF DISPLAY — ST2

ST3
IS DISPLAY CAPABLE OF HANDLING HFR MOVING IMAGE DATA?

YES

NO

DECODE BOTH BASIC AND EXTENDED STREAMS — ST6

ST7
DOES DISPLAY HAVE FUNCTION OF INVERSE BLENDING PROCESS?

YES

NO

DECODE ONLY BASIC STREAM — ST4

PERFORM INVERSE BLENDING PROCESS ON STB SIDE — ST8

PERFORM INVERSE BLENDING PROCESS ON DISPLAY — ST9

END — ST5

EP 3 706 422 A1

# FIG.22

# FIG.23

(a)

(b)

# FIG.24

Info Frame structure for blending_type

|  | 7 | 6 | 5 | 4 | 3 | 2 | 1 | 0 |
|---|---|---|---|---|---|---|---|---|
| Info Frame Type Code | New InfoFrame Type | | | | | | | |
| Info Frame Version Number | Version = 0x01 | | | | | | | |
| Length of HFR InfoFrame | Length | | | | | | | |
| Data Byte 1 | picture_id | | | | | | | |
| Data Byte 2 | blending_flag | | | | | | | |
| Data Byte 3 | blend_tree_phase | | | | number_of_nodes | | | |
| Data Byte 4 | blending_coefficient | | | | | | | |
| Data Byte 5 | target_picture_id | | | | | | | |

# FIG.25

Info Frame structure for blending_type

| | 7 | 6 | 5 | 4 | 3 | 2 | 1 | 0 |
|---|---|---|---|---|---|---|---|---|
| Info Frame Type Code | New InfoFrame Type | | | | | | | |
| Info Frame Version Number | Version = 0x01 | | | | | | | |
| Length of HFR InfoFrame | Length | | | | | | | |
| Data Byte 1 | Dlayer_id | | | | | | | |
| Data Byte 2 | blending_flag | | | | | | | |
| Data Byte 3 | blend_tree_phase | | | | number_of_nodes | | | |
| Data Byte 4 | blending_coefficient | | | | | | | |
| Data Byte 5 | target_Dlayer_id | | | | | | | |
| Data Byte 6 | direction_type | | | | | | | |

EP 3 706 422 A1

# FIG.26

200-1

| 202 | 203 | STb,STe1,STe2/<br>STb,STe1/<br>STb | 204 | Qb,Qe1,Qe2/<br>Qb,Qe1/<br>Qb | 205 | 208 |
|---|---|---|---|---|---|---|
| RECEPTION UNIT | DEMULTIPLEXER | | DECODER | | POST PROCESSOR | HDMI TRANSMISSION UNIT |

TS

CONTROL UNIT

201-1

EP 3 706 422 A1

# FIG.27

200-2A(200-2B)

| 209 | 205 | 206 | 207 |
|---|---|---|---|
| HDMI RECEPTION UNIT | POST PROCESSOR | MCFI | PANEL DISPLAY UNIT |

CONTROL UNIT

201-2

# FIG.28

200-2C

| 209 | 206 | 207 |
|---|---|---|
| HDMI RECEPTION UNIT | MCFI | PANEL DISPLAY UNIT |

CONTROL UNIT

201-2

## INTERNATIONAL SEARCH REPORT

International application No.

PCT/JP2018/038743

**A. CLASSIFICATION OF SUBJECT MATTER**
Int.Cl. H04N19/70(2014.01)i, H04N19/172(2014.01)i, H04N19/31(2014.01)i,
H04N19/587(2014.01)i, H04N19/85(2014.01)i, H04N21/2343(2011.01)i

According to International Patent Classification (IPC) or to both national classification and IPC

**B. FIELDS SEARCHED**

Minimum documentation searched (classification system followed by classification symbols)
Int.Cl. H04N19/70, H04N19/172, H04N19/31, H04N19/587, H04N19/85,
H04N21/2343

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)
IEEE Xplore

**C. DOCUMENTS CONSIDERED TO BE RELEVANT**

| Category* | Citation of document, with indication, where appropriate, of the relevant passages | Relevant to claim No. |
|---|---|---|
| A | WO 2017/065128 A1 (SONY CORPORATION) 20 April 2017, paragraphs [0094], [0098], [0107], fig. 11, 12 & CA 3001290 A1, paragraphs [0094], [0098], [0107], fig. 11, 12 & KR 10-2018-0067527 A | 1–14 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01.11.2018 | 20.11.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/038743

C (Continuation).   DOCUMENTS CONSIDERED TO BE RELEVANT

| Category* | Citation of document, with indication, where appropriate, of the relevant passages | Relevant to claim No. |
|---|---|---|
| A | "ATSC Standard: Video-HEVC(A/341)", [online], ATSC, 19 May 2017, Doc.A/341:2017, pp. 23-25, [retrieved on 01 November 2018], retrieved from the Internet: <URL: https://www.atsc.org/wp-content/uploads/2017/05/A341-2017-Video-HEVC-1.pdf>. Especially, see Annex D. | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015076277 A